# EUROPEAN PATENT SPECIFICATION

(11) **EP 3 489 984 B1**
(45) Date of publication and mention of the grant of the patent: **29.09.2021**
(21) Application number: 17830994.4
(22) Date of filing: 18.07.2017
(51) Int. Cl.: H01H 35/38, F16K 37/00, F16N 29/00, F16K 1/38, F16K 1/54, F16K 15/02, F16K 15/06, F16N 25/00, F16N 7/38

(54) **DEVICE FOR DETECTING FLUID FLOW**
VORRICHTUNG ZUR ERFASSUNG EINES FLÜSSIGKEITSFLUSSES
DISPOSITIF DE DÉTECTION D'ÉCOULEMENT DE FLUIDE

(30) Priority: 20.07.2016 JP 2016142359; 26.09.2016 JP 2016187037; 14.11.2016 JP 2016221215; 29.12.2016 JP 2016257382
(43) Date of publication of application: 29.05.2019
(73) Proprietor: Lube Corporation, Shinjuku-ku Tokyo 169-0051 (JP)
(72) Inventor: WADA, Koichi, Tokyo 169-0051 (JP)
(74) Representative: Liebetanz, Michael
(86) International application number: PCT/JP2017/025918
(87) International publication number: WO 2018/016478

(56) References cited:
- EP-A2- 0 287 289
- WO-A1-2016/085573
- CN-A- 105 422 924
- CN-Y- 201 084 644
- DE-A1- 2 042 617
- FR-A1- 2 376 977
- JP-A- H03 283 222
- JP-A- 2003 203 548
- JP-U- 3 009 191
- JP-U- S5 316 743
- JP-U- S5 316 743
- JP-U- H02 140 734
- JP-U- H02 144 743
- US-A1- 2015 219 234

## Description

### [Technical Field]

The invention relates to, for example, a device for detecting fluid flow, the device detecting the flow of fluid made up of a lubricant, such as grease or oil, flowing through a pipeline of a lubrication system provided for an industrial machine, such as an injection molding machine, a machine tool or the like, and in particular, a device for detecting fluid flow, the device allowing the flow of fluid to be detected by sensing opening and closing of an inner valve member.

### [Background Art]

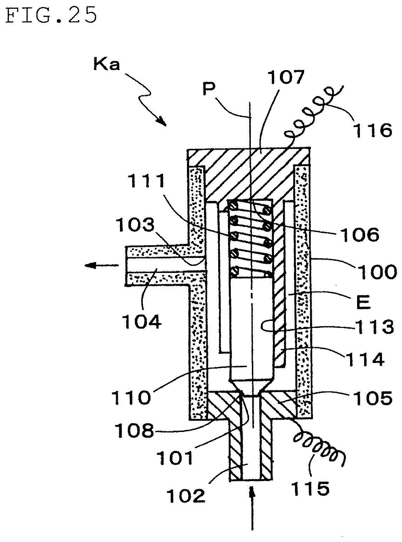

Conventionally, as this type of the device for detecting fluid flow, for example, what is disclosed in Japanese Utility Model Laid-Open No. S53-16743 has been known. As shown in Figure 25, this device Ka for detecting fluid flow includes a body 100 made up of an insulator including a fluid space E having a cylindrical inner surface allowing fluid to pass therethrough, and is configured such that a fluid supply port 102 having a supply aperture 101 centered on the central axis P of the fluid space E is formed at one end of the fluid space E in this body 100, a fluid discharge port 104 having a discharge aperture 103 communicating with the fluid space E is formed on a side of the body 100, a formation member of the supply aperture 101 forming the supply aperture 101 is configured as one electrode 105 made up of a conductor, the body 100 is provided with another electrode 107 that includes an exposure part 106 exposed on the other side of the fluid space E and is made up of a conductor insulated from the one electrode 105, a valve member 110 which is made up of a conductor is stored in the fluid space E, the valve member 110 being moved along the central axis P of the fluid space E to come into contact with an aperture edge 108 of the supply aperture 101 and close the supply aperture 101 and to be apart from the supply aperture 101 and open the supply aperture 101, and a coil spring 111 which is made up of a conductor, whose one end is connected to the valve member 110, whose other end is connected to the exposure part 106 of the other electrode 107, and which always urges the valve member 110 in a direction of closing the supply aperture 101, is stored in the fluid space E. A cylindrical guide member 114 is fixed to the other electrode 107; the guide member 114 has a slide hole 113 whose axis is on the axis line along the central axis P of the fluid space E, in which the valve member 110 having a protruding distal end 112 is slidably inserted, and which stores the coil spring 111. The device Ka for detecting fluid flow constitutes what is called a check valve by opening and closing the valve member 110.

The flow detecting device Ka is connected to a detector, not shown, via wiring 115 connected to the one electrode 105 and via wiring 116 connected to the other electrode 107. This detector always applies a voltage to an electric circuit that includes the one electrode 105, the valve member 110, the coil spring 111 and the other electrode 107, and electrically senses connection when the valve member 110 of the electric circuit is closed and disconnection when this member is opened, thereby sensing the flow of the fluid.

Patent Literature 2 (CN 201 084 644 Y) discloses a water flow switch with an main body being a section of hollow insulated casing, wherein the two ends of the insulated casing are connected with a metal waterway connector, with a metal contact plug capable of sliding within the cavity and a reset spring arranged inside the cavity of the hollow insulated casing.

Patent Literature 3 (CN 105 422 924 A) discloses a one-way conduction fluid sensor, wherein a valve seat is arranged on the inner wall of one end of a housing with a fluid channel; a valve element inlaid with a magnet block and being capable of controlling positive conduction and reverse blocking being arranged on the valve seat; a limiting rod being arranged at the tail part of the valve element; the tail end of the limiting rod pointing to the other end of the housing; and a magnetic switch being arranged on the outer wall of the housing which is turned on or off by virtue of magnetic force of the magnet block when the valve element is opened or closed.

### [Citation List]

### [Patent Literature]

[Patent Literature 1] Japanese Utility Model Laid-Open No. S53-16743
[Patent Literature 2] CN 201 084 644 Y
[Patent Literature 3] CN 105 422 924 A

### [Summary of Invention]

### [Technical Problem]

Unfortunately, according to the conventional device Ka for detecting fluid flow described above, for example, a lubrication system that includes a quantitative valve for discharging lubricant as fluid by a small amount, e.g., about 0.005 to 1 cc one time toward a lubrication site, has a problem in that the reliability of detecting the flow of lubricant is low in a case where this device is connected to a lubrication pipe from the quantitative valve to the lubrication site, detects the flow of the lubricant, and intends to perceive whether the lubricant is securely supplied or not.

This is because supply of fluid from the supply port 102 causes the valve member 110 to move against the urging force of the coil spring 111, come apart from the supply aperture 101 to open this aperture and disconnect the electric circuit, but when the flow rate of the fluid is relatively low, specifically, for example, when the flow rate is significantly low, i.e., 0.1 cc or less, or even when the flow rate of the fluid is relatively high but, for example, the flow velocity is low under situations or the like of a large number of quantitative valves in use, the amount of movement (lifting amount) of the valve member 110 is significantly small, and there are therefore some cases where even with a flow of fluid, the distal end 108 of the valve member 110 does not completely come apart from the one electrode 105 and a part thereof maintains the contact state, and opening (disconnection) cannot be detected. If the urging force of the coil spring 111 is reduced in order to address this problem, the returning operation of the valve member 110 is degraded, thereby causing an adverse effect.

The invention has been made in view of the above problem, and has an object to provide a flow detecting device that allows a valve member to be securely separated from a supply aperture even with a low fluid flow rate, without adversely affecting the returning operation of the valve member, thereby facilitating improvement of the reliability of flow detection.

### [Solution to Problem]

To achieve such an object, a device for detecting fluid flow as defined in claim 1 is provided. Further details of implementation are given in the dependent claims.

### [Brief Description of Drawings]

[Figure 1] Figure 1 shows an example of a lubrication system that includes a device for detecting fluid flow according to an embodiment of the invention.
[Figure 2] Figure 2 is a sectional view showing the device for detecting fluid flow according to the embodiment of the invention.
[Figure 3] Figure 3 is a sectional view showing an operation state in the device for detecting fluid flow according to the embodiment of the invention.
[Figure 4] Figure4 ((a), (b) and (c)) is main part enlarged sectional views showing modes of contact between a valve member and a contact of one electrode in the device for detecting fluid flow according to the embodiment of the invention.
[Figure 5] Figure 5 is an exploded perspective view showing components in a body in the device for detecting fluid flow according to the embodiment of the invention.
[Figure 6] Figure 6 is a front view showing the valve member in the device for detecting fluid flow according to the embodiment of the invention.
[Figure 7] Figure 7 shows a guide member in the device for detecting fluid flow according to the embodiment of the invention; (a) is a plan view, (b) is a front view, (c) is a bottom view, and (d) is a side view.
[Figure 8] Figure 8 is a sectional view showing a device for detecting fluid flow according to another embodiment of the invention.
[Figure 9] Figure 9 is a sectional view showing a device for detecting fluid flow according to still another embodiment of the invention.
[Figure 10] Figure 10 is a sectional view showing a device for detecting fluid flow not according to the invention.
[Figure 11] Figure 11 is a sectional view showing the device for detecting fluid flow according to still another embodiment of the invention.
[Figure 12] Figure 12 is an exploded perspective view showing components in a body in the device for detecting fluid flow according to the other embodiment of the invention.
[Figure 13] Figure 13 is a modified example of the device for detecting fluid flow according to one example not belonging to the invention; (a) is a sectional view, and (b) shows an arrangement state of a permanent magnet.
[Figure 14] Figure 14 is a sectional view showing a device for detecting fluid flow according to still another embodiment of the invention.
[Figure 15] Figure 15 is sectional views showing modified examples (a), (b) and (c) of the device for detecting fluid flow according to the other embodiment of the invention.
[Figure 16] Figure 16 shows a device for detecting fluid flow according to another type of embodiment of the invention; (a) is a perspective view showing a connection part of aggregated electrodes in an exposed state, and (b) is a perspective view showing the connection part of the aggregated electrodes in a covered state.
[Figure 17] Figure 17 is a sectional view showing the device for detecting fluid flow according to the other type of embodiment of the invention.
[Figure 18] Figure 18 shows a guide member in the device for detecting fluid flow according to the other type of embodiment of the invention; (a) a perspective view of an illustration with the valve member, (b) is another perspective view, (c) is a plan view, (d) is a left side view, (e) is a right side view (f) is a front view, and (g) is a front sectional view.
[Figure 19] Figure 19 shows a device for detecting fluid flow according to still another type of embodiment of the invention; (a) is a perspective view showing a connection part of aggregated electrodes in an exposed state, and (b) is a perspective view showing the connection part of the aggregated electrodes in a covered state.
[Figure 20] Figure 20 is a sectional view showing the device for detecting fluid flow according to the still other type of embodiment of the invention.
[Figure 21] Figure 21 is a sectional view showing the device for detecting fluid flow according to yet another type of embodiment of the invention.
[Figure 22] Figure 22 shows a device for detecting fluid flow where a reflective photosensor is mounted, according to still another example not belonging to the invention; (a) is a sectional view, and (b) is a side view.
[Figure 23] Figure 23 shows a device for detecting fluid flow where a transmissive photosensor is mounted, according to an example not belonging to the invention; (a) is a sectional view, and (b) is a side view.
[Figure 24] Figure 24 shows a configuration of a guide member in a device for detecting fluid flow according to an example not belonging to the invention; (a) is a sectional view showing a state of being attached to a valve member, (b) is a plan view showing an example of the shape, and (c) is a plan view showing another example of the shape.
[Figure 25] Figure 25 is a sectional view showing an example of a conventional device for detecting fluid flow.

### [Description of Embodiments]

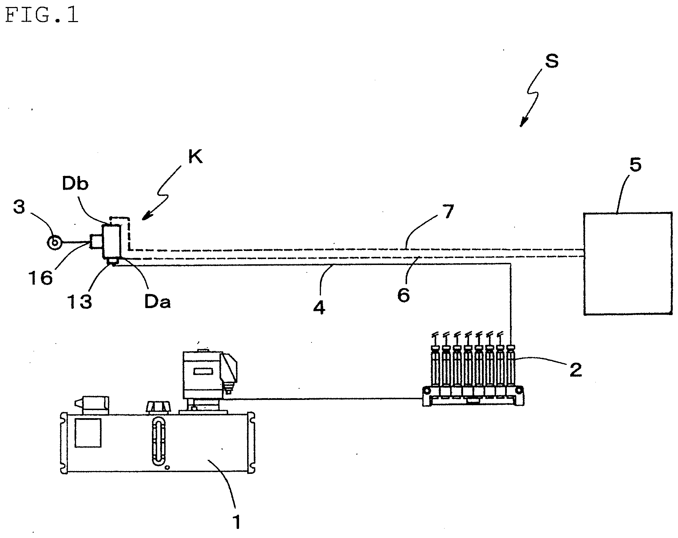

Hereinafter, referring to the accompanying drawings, a device for detecting fluid flow according to an embodiment of the invention is described. As shown in Figure 1, a device K for detecting fluid flow according to the embodiment is used for a lubrication system S provided for an industrial machine, such as an injection molding machine, a machine tool and the like. For example, the lubrication system S, in which a quantitative valve 2 operated by applying and reducing the fluid pressure is connected to a lubricant pump apparatus 1 for feeding a fluid made up of a lubricant, such as grease or oil, intermittently supplies the fluid to a lubrication site 3 through the quantitative valve 2. Several amounts of flow per shot through the quantitative valve 2 are prepared ranging from 0.005 to 1 cc, for example. One or more among these amounts are selected and installed in conformity with lubrication sites. The device K for detecting fluid flow according to the embodiment installed in a lubrication pipeline 4 from the quantitative valve 2 to the lubrication site 3, and can detect the fluid flow and determine whether the fluid is supplied or not by a detector 5.

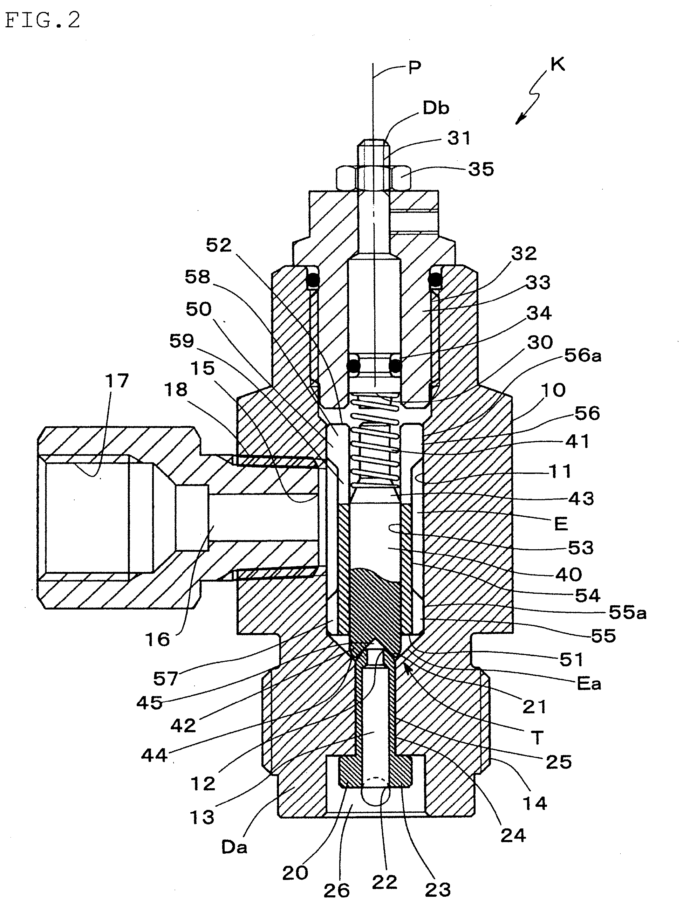

As shown in Figures 2 to 5, the device K for detecting fluid flow according to the embodiment includes a body 10 that has a fluid space E having a cylindrical inner surface 11 allowing a fluid to pass therethrough, and is made up of a conductor, such as metal. In the body 10, a fluid supply port 13 having a supply aperture 12 centered on the central axis P of the fluid space E is formed at one end of this fluid space E. One end Ea of the fluid space E is formed in a manner inclined toward the supply aperture 12. A male thread 14 for connection to the lubrication pipeline is formed on an external side of a site where the supply port 13 is formed. A fluid discharge port 16 that has a discharge aperture 15 communicating with the fluid space E is formed on a side of the body 10. The discharge port 16 internally includes a female thread part 17 for connection to the lubrication pipeline 4, and is formed to have an adaptor shape allowing detachable connection to the body 10 by a thread member 18.

In this embodiment, the body 10 is configured to be one electrode Da that is made up of a conductor and includes a contact T exposed toward one side of the fluid space E. Wiring is appropriately connected to the one electrode Da. The body 10 includes a bush 20 that is made up of a conductor, such as metal, and forms the supply aperture 12. The bush 20 is a pipe-shaped member and includes the supply port 13 centered on the central axis P of the fluid space E. An end closer to the supply aperture 12 constitutes an aperture edge 21 of the supply aperture 12 formed tapering in an inclined manner, and is disposed protruding into the fluid space E. A head 23 of the bush 20, where an inlet aperture 22 opposite to the supply aperture 12 is formed, is formed to have a larger diameter than the diameter of a typical part 24. The typical part 24 of the bush 20 is engaged into an engagement hole 25 coaxial with the central axis P of the fluid space E formed in the body 10. The head 23 is continuous to the engagement hole 25, is formed to have a larger diameter than the engagement hole 25 has, and is disposed in an inlet hole 26 coaxial with the central axis P of the fluid space E opening at an end of the body 10.

The body 10 is provided with another electrode Db that has an exposure part 30 exposed on the other end face of the fluid space E and is insulated from the one electrode Da and is made up of a conductor, such as metal. The other electrode Db is formed to have a rod shape having an axis that is the axis line along the central axis P of the fluid space E. One end thereof is formed as the exposure part 30 exposed on the other end face of the fluid space E. The other end thereof is formed as a connection part 31 which protrudes from the body 10 and on which a male thread is formed. The other electrode Db is made up of an insulator, such as resin, and is held by a holding member 33 detachably provided for the body 10 by a thread member 32. The holding member 33 has an axis that is the axis line along the central axis P of the fluid space E. In this member, the exposure part 30 of the other electrode Db internally resides, the other end of a coil spring 41, described later, is stored, and a holding hole 34 that holds the connection part 31 while allowing this part to protrude is formed. The other electrode Db is fixed in the holding hole 34 by press fitting or screw fixing into the holding hole 34. A nut 35 for allowing a ring-shaped terminal (not shown) of wiring 7 (Figure 1) inserted into the connection part 31 to be fixed is screwed on the male thread of the connection part 31.

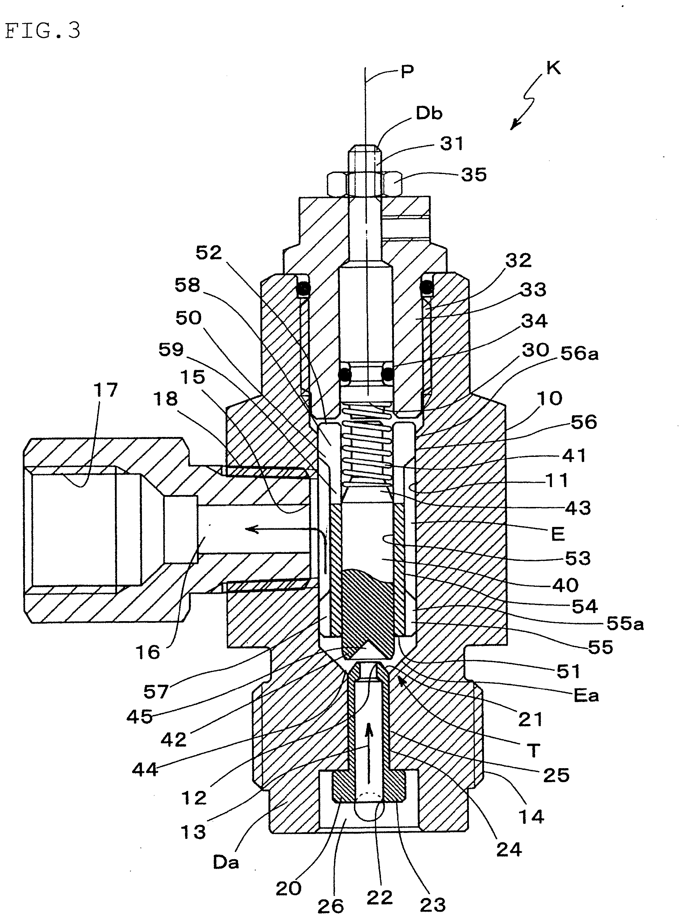

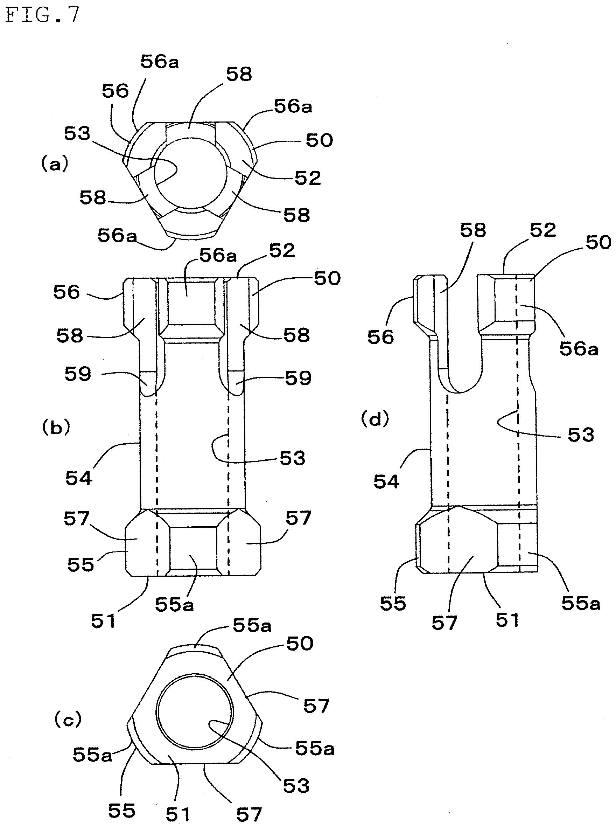

As shown in Figures 2 to 7, the fluid space E internally stores: a valve member 40 that is made up of a conductor, such as metal, is moved along the central axis P of the fluid space E, comes into contact with the contact T of the one electrode Da to close the supply aperture 12, and comes apart from the contact T to open the supply aperture 12; and a coil spring 41 that is made up of a conductor, such as metal, is connected to the valve member 40 at one end while being connected to the exposure part 30 of the other electrode Db at the other end, and always urges the valve member 40 in a direction of closing the supply aperture 12. Accordingly, this flow detecting device K can detect the fluid flow by electrically detecting connection when the valve member 40 is closed (Figure 2) and disconnection when this member is opened (Figure 3) in the electric circuit that includes the one electrode Da, the valve member 40, the coil spring 41 and the other electrode Db.

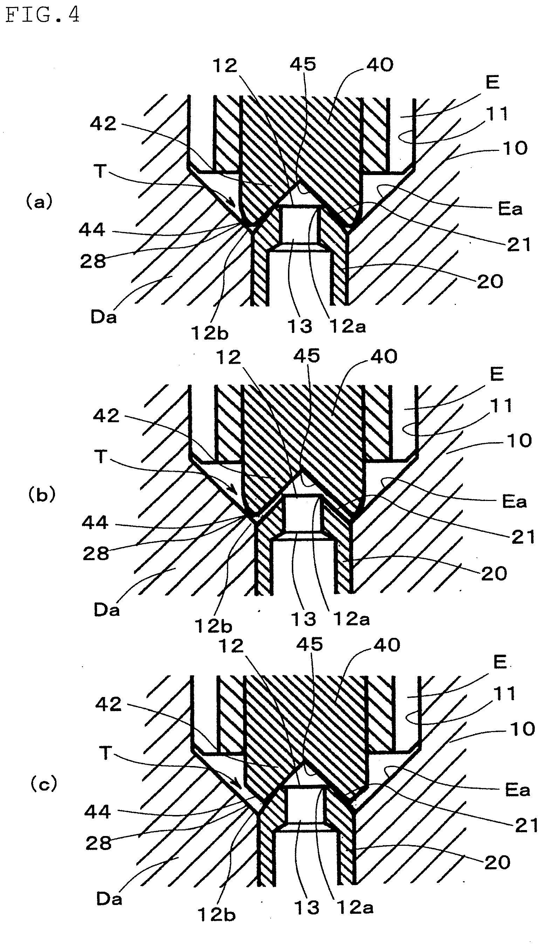

In detail, as shown in Figure 4, the contact T of the one electrode Da is provided at the aperture edge 12a of the supply aperture 12 and/or the peripheral part 12b of the aperture edge 12a. The peripheral part 12b includes the aperture edge 21 of the bush 20 at the supply aperture 12, and an outer peripheral part 28 that is a part of the one end Ea of the fluid space E outer than the bush 20. The aperture edge 21 of the bush 20 at the supply aperture 12 is formed tapering in an inclined manner, and is formed to protrude into the fluid space E.

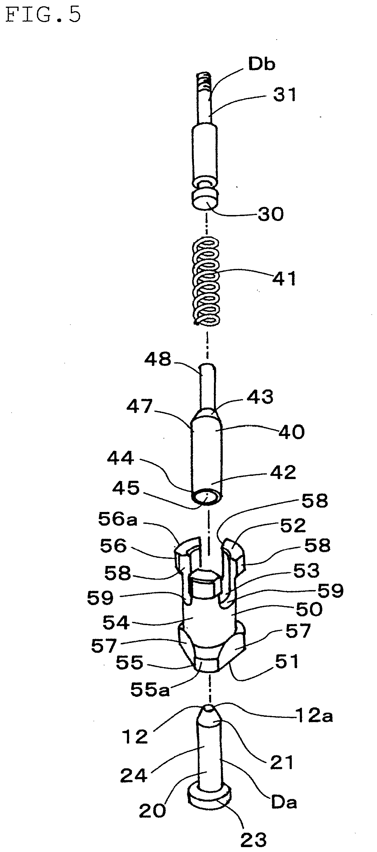

The valve member 40 is formed to have a rod shape that includes a distal end 42 capable of coming into contact with the contact T to block the supply aperture 12, and has an axis on the axis line along the central axis P of the fluid space E. As shown in Figure 5, the valve member 40 includes: a large-diameter part 47 that is nearer to the distal end and to be fitted into an insertion hole 53 of the guide member 50, described later; and a small-diameter part 48 that is nearer to the rear end and is formed narrower than the large-diameter part 47 so as to be inserted into the coil spring 41. One end of the coil spring 41 is held by a step part 43 between the large-diameter part 47 and the small-diameter part 48. The distal end 42 of the valve member 40 is configured to include a depression part 45 that faces the aperture edge 21 at the supply aperture 12 and is depressed inward. The depression part 45 is formed to have a conical shape having an axis on the axis line along the central axis P of the fluid space E. Meanwhile, the aperture edge 21 of the bush 20 at the supply aperture 12 is formed to protrude into the fluid space E so as to face the inside of the depression part 45 when the valve member 40 blocks the supply aperture 12.

The contact of the valve member 40 with the contact T of the one electrode Da is achieved onto the peripheral part 12b of the supply aperture 12. As shown in Figure 4(a), the inner surface of the depression part 45 of the distal end 42 is in contact with the external surface of the aperture edge 21 of the bush 20, and a peripheral part 44 of the depression part 45 is in contact with the outer peripheral part 28 that is of the one end Ea of the fluid space E and is outer than the aperture edge 21 of the bush 20.

However, the contact of the valve member 40 with the contact T of the one electrode Da is not limited to the mode shown in Figure 4(a). For example, the shape and dimensions of each member may be defined so as to achieve a mode where the peripheral edge part 44 of depression part 45 is in contact only with the outer peripheral part 28 that is of the one end Ea of the fluid space E and is outer than the aperture edge 21 of the bush 20 as shown in Figure 4(b) or to achieve a mode where only the inner surface of the depression part 45 of the distal end 42 is in contact with the external surface of the aperture edge 21 of the bush 20 as shown in Figure 4(c).

As show in Figures 2 to 6 and 8, this flow detecting device K includes the guide member 50 that is made up of an insulator, such as resin, and is additionally provided for the valve member 40 and is provided in the fluid space E. The guide member 50 is configured to secure the flow path of the fluid from the supply aperture 12 to the discharge aperture 15 while being slidable on the cylindrical inner surface 11 of the fluid space E, has a reception surface 51 facing one end face of the fluid space E while receiving the fluid from the supply aperture 12, and has a top surface 52 facing another end face of the fluid space E.

In detail, the insertion hole 53 is formed to penetrate the guide member 50. This hole has an axis on the axis line along the central axis P of the fluid space E. In this hole, the distal end 42 of the valve member 40 is inserted, with the distal end 42 protruding therefrom, and the one end of the coil spring 41 is stored at the other end face of the fluid space E. A narrow part 54 allowing the fluid to pass along the circumferential direction is formed on the outer periphery of the intermediate part of the guide member 50. A part of the guide member 50 nearer to the one end face of the fluid space E is configured as a one-end slider 55 that includes a reception surface 51 and includes a one-end slide surface 55a slidable on the cylindrical inner surface 11 of the fluid space E. A part of the guide member 50 nearer to the other end face of the fluid space E is configured as another-end slider 56 that includes a top surface 52 and includes another-end slide surface 56a slidable on the cylindrical inner surface 11 of the fluid space E. The valve member 40 is inserted into the insertion hole 53 of the guide member 50, thereby integrating these members. Consequently, production is facilitated.

One-end notches 57 that range between the reception surface 51 and the narrow part 54 and allow the fluid to pass therethrough are formed on the outer side of the one-end slider 55. The multiple (three in this embodiment) one-end notches 57 are provided. The one-end notches 57 are each formed to have an identical size and an identical shape, and are arranged about the axis line at regular angular intervals.

Meanwhile, another-end notches 58 that range between the top surface 52 and the narrow part 54 and allow the fluid to pass therethrough are formed on the outer side of the other-end slider 56. The multiple (three in this embodiment) other-end notches 58 are provided. The other-end notches 58 are each formed to have an identical size and an identical shape, and are arranged about the axis line at regular angular intervals.

Multiple communication paths 59 communicating with the insertion hole 53 are formed at sites of the guide member 50 that correspond to the small-diameter part 48 of the valve member 40 and are at least any of the narrow part 54, the one-end notches 57, and the other end notches 58. In the embodiment, the small-diameter part 48 is provided for the valve member 40 nearer to the rear end. One end of the coil spring 41 is stored in the insertion hole 53. The multiple (three) communication paths 59 are formed at sites where the narrow part 54 and/or the other-end notches 58 of the guide member 50 reside (sites ranging from the other-end notches 58 to a part of the narrow part 54, in the embodiment).

Consequently, as shown in Figure 1, in a case where the flow detecting device K according to the embodiment is used, for example, the supply port 13 and the discharge port 16 are connected to the lubrication pipeline 4 from the quantitative valve 2 to the lubrication site to intervene therebetween, the wiring 6 from the detector 5 is connected to the one electrode Da (body 10), and the wiring 7 is connected to the other electrode Db respectively, a voltage is always applied to the electric circuit that includes the one electrode Da, the valve member 40, the coil spring 41 and the other electrode Db, and connection of the electric circuit when the valve member 40 is closed (Figure 2) and disconnection when this member is opened (Figure 3) are electrically sensed by the detector 5.

In detail, at the closed position of the valve member 40 shown in Figure 2, when the fluid is supplied through the supply port 13, as shown in Figure 3, the fluid flows into the fluid space through the supply aperture 12 into the fluid space E, the fluid is applied onto the valve member 40 and the reception surface 51 of the guide member 50 accompanying the valve member 40, and the guide member 50 slides on the cylindrical inner surface 11 of the fluid space E. Accordingly, the valve member 40 and the guide member 50 are integrally pushed above, thereby opening the valve member 40. When the supply of the fluid through the fluid supply port 13 is stopped, the valve member 40 and the guide member 50 are moved toward the one end face of the fluid space E by the urging force of the coil spring 41, and the valve member 40 closes the supply aperture 12, as shown in Figure 2.

In this case, when the fluid is supplied through the supply port 13, as shown in Figure 3, the fluid is received also by the reception surface 51 of the guide member 50. Accordingly, the valve member 40 easily floats. Consequently, the valve member 40 can be securely apart from the supply aperture 12. For example, when the flow rate of the fluid is relatively low, specifically, for example, when the flow rate is significantly low, i.e., 0.1 cc or less, or even when the flow rate of the fluid is relatively high but the flow velocity is low under situations or the like of a large number of quantitative valves in use, the amount of movement (lifting amount) of the valve member is significantly small. However, the valve member 40 is securely pushed upward by floating of the guide member 50. Accordingly, the valve member 40 can securely come apart from the contact T of the one electrode Da where the supply aperture 12 resides. Consequently, even though the fluid flows as in the conventional art, a situation can be prevented where the valve member 40 does not entirely come apart from the one electrode Da and a part thereof is maintained to be in contact and opening (disconnection) cannot be detected. The detection reliability can be improved. Even when the top surface 52 of the guide member 50 is in contact with the other end face of the fluid space E, short circuit is prevented, because the guide member 50 is made up of an insulator.

The conical depression part 45 depressed inward is formed at the distal end 42 of the valve member 40. Accordingly, when the fluid is supplied through the supply port 13, the fluid flowing through the supply aperture 12 rebounds by the depression part 45 and becomes difficult to escape outward, and the fluid can be easily received. Consequently, the valve member 40 can further easily float upward. Therefore, the valve member 40 can securely come apart from the contact T of the one electrode Da where the supply aperture 12 resides. Furthermore, the aperture edge 21 of the supply aperture 12 is formed in the protruding manner. Accordingly, the fluid can flow intensively into the depression part 45 of the valve member 40. Consequently, the configuration capable of further easily receiving the fluid can be achieved, which can facilitate floating of the valve member 40. Accordingly, the valve member 40 can securely come apart from the contact T of the one electrode Da where the supply aperture 12 resides. The diameter of the supply aperture 12 is smaller than the diameter of the aperture of the depression part 45. Accordingly, the flow velocity of the fluid can be higher than that in a case where the diameter of the supply aperture 12 is substantially identical to the diameter of the aperture of the depression part 45. Also in this point, the valve member 40 can easily float, and the valve member 40 can securely come apart from the one electrode Da where the supply aperture 12 resides. Consequently, the detection reliability can be further improved. When the valve member 40 is returned, the aperture edge of the depression part 45 has an acute angle. Consequently, the effect of sharing the fluid occurs, and the closing operation can be smoothly performed accordingly.

Furthermore, the guide member 50 slides on the cylindrical inner surface 11 of the fluid space E while securing the fluid flow path from the supply aperture 12 to the discharge aperture 15, thereby allowing the fluid to be introduced from the discharge aperture 15 to the discharge port 16. That is, when the valve member 40 and the guide member 50 are pushed upward by the fluid, the fluid passes through the one-end notches 57 and the narrow part 54 and reaches the discharge aperture 15, and is discharged through the discharge port 16. In this case, the narrow part 54 is provided. Accordingly, the resistance against the fluid is reduced. Consequently, the fluid can be securely guided through the supply aperture 12 to the discharge aperture 15. The guide member 50 includes the one-end slider 55 and the other-end slider 56 at the opposite ends, with the narrow part 54 intervening therebetween. Accordingly, this member is prevented from being inclined due to the fluid flow. Furthermore, the fluid can pass through the other-end notches 58. Consequently, the guide member 50 can smoothly slide and move when the valve member 40 is opened and closed. Accordingly, when the valve member 40 is opened, the valve member 40 can easily float. When the valve member 40 is closed, the fluid flow path from the supply aperture 12 to the discharge aperture 15 is secured in the guide member 50. Consequently, the supply aperture 12 can be securely closed without obstructing the returning operation of the valve member 40. The one end of the coil spring 41 is stored in the insertion hole 53. Consequently, the holding becomes stable. Also in this point, the valve member 40 and the guide member 50 can be smoothly moved.

The one-end notches 57 are each formed to have the same size and shape, and are arranged at regular angular intervals. Likewise, the other-end notches 58 are each formed to have the same size and shape, and are arranged at regular angular intervals. Accordingly, the fluid flow becomes uniform. Consequently, when the valve member 40 is opened, the fluid can be securely introduced, while smoothly moving the valve member 40 and the guide member 50. When the valve member 40 is closed, the supply aperture 12 can be securely closed.

Furthermore, the multiple (three) communication paths 59 are formed at the sites ranging from the other-end notches 58 to the part of the narrow part 54 of the guide member 50. The resistance against the fluid is reduced accordingly. Consequently, the fluid can easily flow. Accordingly, when the valve member 40 is opened, the fluid can be securely introduced, while smoothly moving the valve member 40 and the guide member 50. When the valve member 40 is closed, the supply aperture 12 can be securely closed.

In the embodiment described above, the bush 20 is formed separately from the typical part of the body 10. The configuration is not necessarily limited thereto. The bush 20 may be formed integrally with the body 10. The configuration may be appropriately modified.

Next, although not shown, a flow detecting device K according to an example not belonging to the invention different from those described above is described. Unlike the above description, according to this example, the guide member 50 is made up of a conductor and is formed integrally with the valve member 40. The body 10 is made up of an insulator, except for the bush 20. Only the bush 20 serves as the one electrode Da. In this case, contact between the valve member 10 and the one electrode Da is in a mode shown in Figure 4(a) or 4(c). The operation and advantageous effects analogous to those described above are exerted.

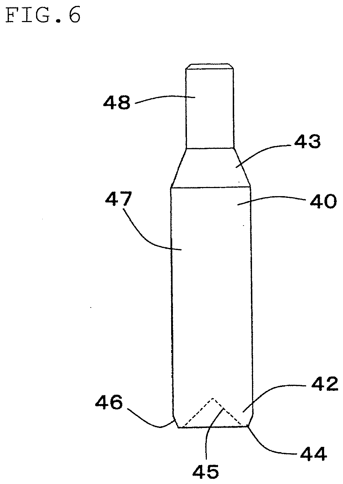

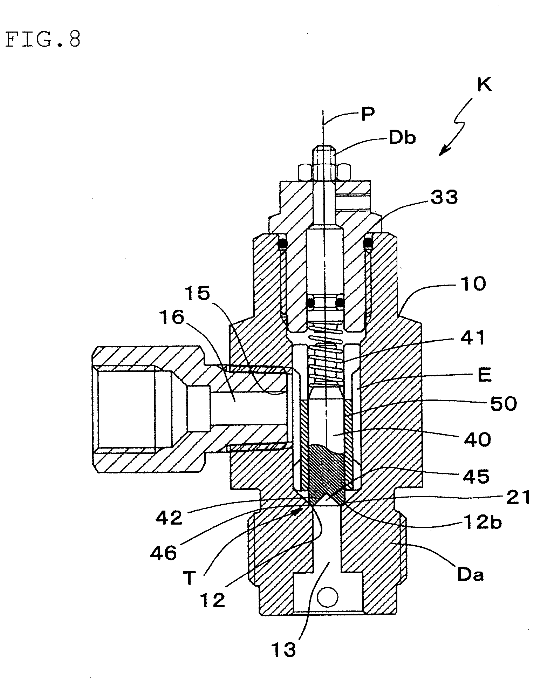

Figure 8 shows a flow detecting device K according to another embodiment of the invention. Unlike the above description, the bush 20 is not provided here. The body 10 made up of a conductor, such as metal, constitutes the one electrode Da. Accordingly, the aperture edge 21 of the supply aperture 12 is formed not to protrude into the fluid space E, but is open at the one end Ea of the fluid space E. An outer peripheral edge 46 (Figure 6) of the peripheral part 44 of the depression part 45 constitutes the contact T of the one electrode Da, and is allowed to contact with the aperture edge 21 (peripheral part 12b) of the supply aperture 12 formed at the one end Ea of the fluid space E. This configuration also exerts the operation and advantageous effects substantially analogous to those described above.

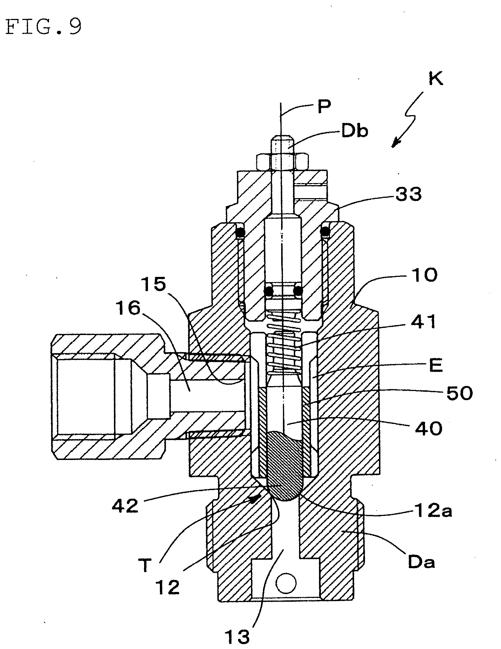

Figure 9 shows a flow detecting device K according to still another embodiment of the invention. Unlike the flow detecting device K shown in Figure 8, the distal end 42 of the valve member 40 is formed to bulge half-spherically. An external surface of the distal end 42 constitutes the contact T of the one electrode Da, and is allowed to contact with the aperture edge 12a of the supply aperture 12 formed at the one end Ea of the fluid space E. At the guide member 50, this configuration also exerts the operation and advantageous effects substantially analogous to those described above.

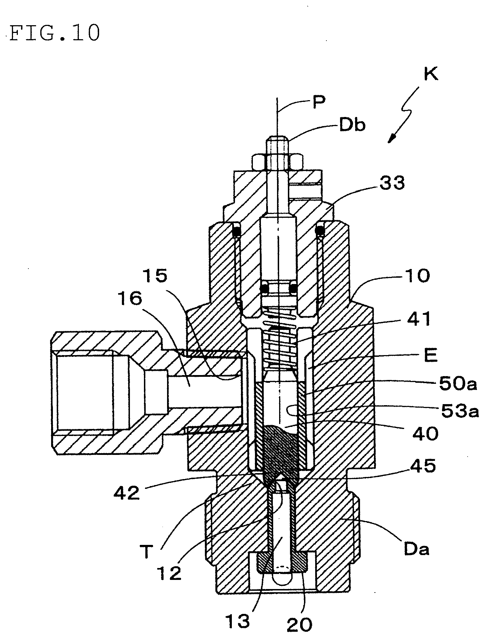

Figure 10 shows a flow detecting device K according to yet another example not belonging to the invention. Unlike the flow detecting device K shown in Figures 2 and 3 , the valve member 40 is provided with a guide member 50a having the same shape as that described above in a manner allowing the valve member 40 to slide. A slide hole 53a is formed to penetrate the guide member 50a. This hole has an axis on the axis line along the central axis P of the fluid space E. In this hole, the distal end 42 of the valve member 40 is slidably inserted, with the distal end 42 protruding therefrom, and the one end of the coil spring 41 is stored at the other end face of the fluid space E. That is, unlike the flow detecting device K described above including the integrated valve member 40 and guide member 50, this flow detecting device K allows the valve member 40 to slide with the guide member 50a.

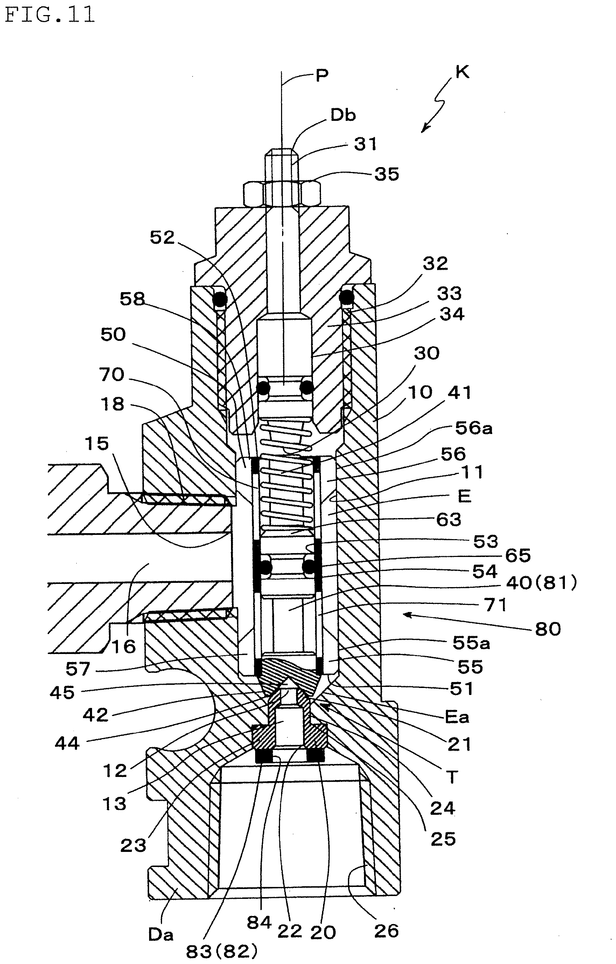

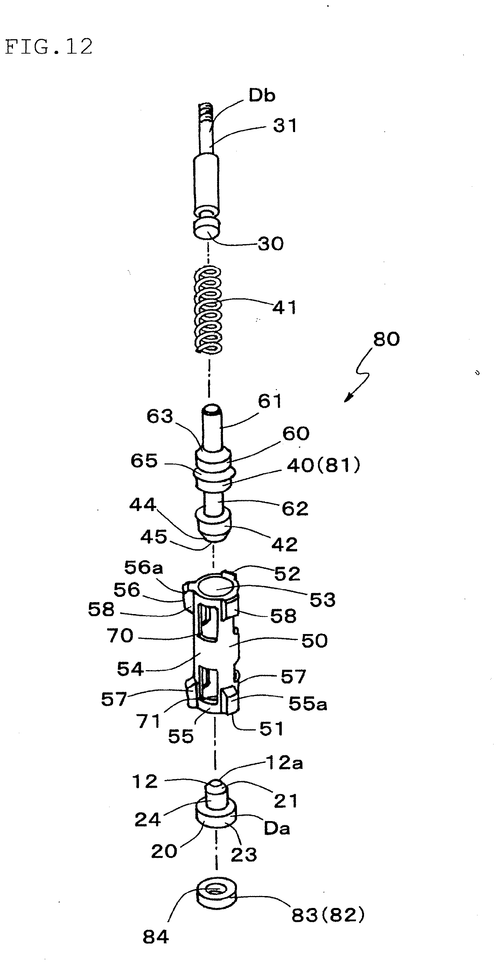

Next, Figures 11 and 12 show a flow detecting device K according to another embodiment of the invention. The flow detecting device K includes a body 10 that has a fluid space E having a cylindrical inner surface 11 allowing a fluid to pass therethrough, and is made up of a conductor, such as metal. In the body 10, a fluid supply port 13 having a supply aperture 12 centered on the central axis P of the fluid space E is formed at one end of this fluid space E. One end Ea of the fluid space E is formed in a manner inclined toward the supply aperture 12. A fluid discharge port 16 that has a discharge aperture 15 communicating with the fluid space E is formed on a side of the body 10. The discharge port 16 is formed to have an adaptor shape allowing detachable connection to the body 10 by the thread member 18.

In this embodiment, the body 10 is configured to be one electrode Da that is made up of a conductor and includes a contact T exposed toward one side of the fluid space E. Wiring is appropriately connected to the one electrode Da. The body 10 includes a bush 20 that is made up of a conductor, such as metal, and forms the supply aperture 12. The bush 20 is a pipe-shaped member and includes the supply port 13 centered on the central axis P of the fluid space E. An end closer to the supply aperture 12 constitutes an aperture edge 21 of the supply aperture 12 formed tapering in an inclined manner, and is disposed protruding into the fluid space E. A head 23 of the bush 20, where an inlet aperture 22 opposite to the supply aperture 12 is formed, is formed to have a larger diameter than the diameter of a typical part 24. The typical part 24 of the bush 20 is engaged into an engagement hole 25 coaxial with the central axis P of the fluid space E formed in the body 10. The head 23 is continuous to the engagement hole 25, is formed to have a larger diameter than the engagement hole 25 has, and is disposed in an inlet hole 26 coaxial with the central axis P of the fluid space E opening at an end of the body 10.

The body 10 is provided with another electrode Db that has an exposure part 30 exposed on the other end face of the fluid space E and is insulated from the one electrode Da and is made up of a conductor, such as metal. The other electrode Db is formed to have a rod shape having an axis that is the axis line along the central axis P of the fluid space E. One end thereof is formed as the exposure part 30 exposed on the other end face of the fluid space E. The other end thereof is formed as a connection part 31 which protrudes from the body 10 and on which a male thread is formed. The other electrode Db is made up of an insulator, such as resin, and is held by a holding member 33 detachably provided for the body 10 by a thread member 32. The holding member 33 has an axis that is the axis line along the central axis P of the fluid space E. In this member, the exposure part 30 of the other electrode Db internally resides, the other end of a coil spring 41, described later, is stored, and a holding hole 34 that holds the connection part 31 while allowing this part to protrude is formed. The other electrode Db is fixed in the holding hole 34 by press fitting or screw fixing into the holding hole 34. A nut 35 for allowing a ring-shaped terminal (not shown) of wiring 7 (Figure 1) inserted into the connection part 31 to be fixed is screwed on the male thread of the connection part 31.

The fluid space E internally stores: a valve member 40 that is made up of a conductor, such as metal, is moved along the central axis P of the fluid space E, comes into contact with the contact T of the one electrode Da to close the supply aperture 12, and comes apart from the contact T to open the supply aperture 12; and a coil spring 41 that is made up of a conductor, such as metal, is connected to the valve member 40 at one end while being connected to the exposure part 30 of the other electrode Db at the other end, and always urges the valve member 40 in a direction of closing the supply aperture 12. Accordingly, this flow detecting device K can detect the fluid flow by electrically detecting connection when the valve member 40 is closed (Figure 2) and disconnection when this member is opened (not shown) in the electric circuit that includes the one electrode Da, the valve member 40, the coil spring 41 and the other electrode Db.

In detail, as described above, as shown in Figure 4, the contact T of the one electrode Da is provided at the aperture edge 12a of the supply aperture 12 and/or the peripheral part 12b of the aperture edge 12a. The peripheral part 12b includes the aperture edge 21 of the bush 20 at the supply aperture 12, and an outer peripheral part 28 that is a part of the one end Ea of the fluid space E outer than the bush 20. The aperture edge 21 of the bush 20 at the supply aperture 12 is formed tapering in an inclined manner, and is formed to protrude into the fluid space E.

The valve member 40 is formed to have a rod shape that includes a distal end 42 capable of coming into contact with the contact T to block the supply aperture 12, and has an axis on the axis line along the central axis P of the fluid space E. As shown in Figure 12, the valve member 40 includes: a large-diameter part 60 that is provided at the middle and to be fitted into an insertion hole 53 of the guide member 50, described later; a small-diameter part 61 that is formed narrower than the large-diameter part 60 so as to be insertable into the coil spring 41 and is nearer to the rear end; and a small-diameter part 62 that is provided between the distal end 42 and the large-diameter part 60 of the valve member 40. One end of the coil spring 41 is held by a step part 63 between the large-diameter part 60 and the small-diameter part 61. An O-ring 64 is arranged around the large-diameter part 60, the O-ring being elastically in contact with the inner surface of the insertion hole 53, described later, and the large-diameter part 60 is fitted into the insertion hole 53 via the O-ring 64.

The distal end 42 of the valve member 40 is configured to include a depression part 45 that faces the aperture edge 21 at the supply aperture 12 and is depressed inward. The depression part 45 is formed to have a conical shape having an axis on the axis line along the central axis P of the fluid space E. Meanwhile, the aperture edge 21 of the bush 20 at the supply aperture 12 is formed to protrude into the fluid space E so as to face the inside of the depression part 45 when the valve member 40 blocks the supply aperture 12.

The contact of the valve member 40 with the contact T of the one electrode Da is achieved onto the peripheral part 12b of the supply aperture 12. As shown in Figure 4(a), the inner surface of the depression part 45 of the distal end 42 is in contact with the external surface of the aperture edge 21 of the bush 20, and a peripheral part 44 of the depression part 45 is in contact with the outer peripheral part 28 that is of the one end Ea of the fluid space E and is outer than the aperture edge 21 of the bush 20. However, the contact of the valve member 40 with the contact T of the one electrode Da is not limited to the mode shown in Figure 4(a). For example, the shape and dimensions of each member may be defined so as to achieve a mode where the peripheral edge part 44 of depression part 45 is in contact only with the outer peripheral part 28 that is of the one end Ea of the fluid space E and is outer than the aperture edge 21 of the bush 20 as shown in Figure 4(b) or to achieve a mode where only the inner surface of the depression part 45 of the distal end 42 is in contact with the external surface of the aperture edge 21 of the bush 20 as shown in Figure 4(c).

This flow detecting device K includes the guide member 50 that is made up of an insulator, such as resin, and is additionally provided for the valve member 40 and is provided in the fluid space E. The guide member 50 is configured to secure the flow path of the fluid from the supply aperture 12 to the discharge aperture 15 while being slidable on the cylindrical inner surface 11 of the fluid space E, has a reception surface 51 facing one end face of the fluid space E while receiving the fluid from the supply aperture 12, and has a top surface 52 facing another end face of the fluid space E.

In detail, the insertion hole 53 is formed to penetrate the guide member 50. This hole has an axis on the axis line along the central axis P of the fluid space E. In this hole, the distal end 42 of the valve member 40 is inserted, with the distal end 42 protruding therefrom, and the one end of the coil spring 41 is stored at the other end face of the fluid space E. The large-diameter part 60 of the valve member 40 is fitted into the insertion hole 53 via the O-ring 64. The fitting is achieved by the O-ring. Consequently, the valve member can be easily fitted to the guide member.

A narrow part 54 allowing the fluid to pass along the circumferential direction is formed on the outer periphery of the intermediate part of the guide member 50. A part of the guide member 50 nearer to the one end face of the fluid space E is configured as a one-end slider 55 that includes a reception surface 51 and includes a one-end slide surface 55a slidable on the cylindrical inner surface 11 of the fluid space E. A part of the guide member 50 nearer to the other end face of the fluid space E is configured as another-end slider 56 that includes a top surface 52 and includes another-end slide surface 56a slidable on the cylindrical inner surface 11 of the fluid space E. The valve member 40 is inserted into the insertion hole 53 of the guide member 50, thereby integrating these members. Consequently, production is facilitated.

One-end notches 57 that range between the reception surface 51 and the narrow part 54 and allow the fluid to pass therethrough are formed on the outer side of the one-end slider 55. The multiple (three in this embodiment) one-end notches 57 are provided. The one-end notches 57 are each formed to have an identical size and an identical shape, and are arranged about the axis line at regular angular intervals.

Meanwhile, another-end notches 58 that range between the top surface 52 and the narrow part 54 and allow the fluid to pass therethrough are formed on the outer side of the other-end slider 56. The multiple (three in this embodiment) other-end notches 58 are provided. The other-end notches 58 are each formed to have an identical size and an identical shape, and are arranged about the axis line at regular angular intervals.

Multiple communication paths 70 communicating with the insertion hole 53 are formed at sites of the guide member 50 that correspond to the small-diameter part 61 of the valve member 40 and are at least any of the narrow part 54, the one-end notches 57, and the other end notches 58. In the embodiment, the small-diameter part 48 is provided for the valve member 40 nearer to the rear end. One end of the coil spring 41 is stored in the insertion hole 53. The multiple (three) communication paths 70 are formed at sites where the narrow part 54 and/or the other-end notches 58 of the guide member 50 reside (sites ranging between the other-end notches 58 and the narrow part 54, in the embodiment).

Furthermore, multiple communication paths 71 communicating with the insertion hole 53 are formed at sites of the guide member 50 that correspond to the small-diameter part 62 of the valve member 40 and are at least any of the narrow part 54, the one-end notches 57, and the other end notches 58. In the embodiment, multiple (three) communication paths 71 are formed at sites where the narrow part 54 of the guide member 50 and/or one-end notches 57 reside (sites ranging between the one-end notches 57 and the narrow part 54 in the embodiment).

Furthermore, this flow detecting device K is provided with an attracting member 80 that permits an operation of opening the valve member 40 on a contact T of one electrode Da due to the fluid supplied through the supply aperture 12, and attracts the valve member 40 toward the contact T of the one electrode Da owing to a magnetic force. The attracting member 80 includes: a first member 81 that is provided at the valve member 40, and is made up of a magnet or a magnetically attachable material magnetically attachable to a magnet; and a second member 82 that is provided at the one electrode Da and is made up of a magnet or a magnetically attachable material magnetically attachable to a magnet to attract the first member 81. In the embodiment, the first member 81 is made up of the valve member 40, and the second member 82 is provided for the body 10. Specifically, the valve member 40 (first member 81) is made of a magnetically attachable material including gold-plated iron. The second member 82 is made up of a permanent magnet 83, and is provided at a head 23 of the bush 20. The permanent magnet 83 (second member 82) is formed to have a ring shape that has a communication hole 84 that communicates with the inlet aperture 22 of the bush 20. In consideration of the balance with the conductive coil spring 41, the attracting force by the attracting member 80 is adjusted by the material and size of the permanent magnet, the magnetic permeability of the valve member 40, the distance between the valve member 40 and the permanent magnet.

Consequently, in a case where the flow detecting device K according to the other embodiment is used, this device basically performs operations analogous to those of the flow detecting device K shown in Figures 1 to 5 described above. That is, when the fluid is supplied through the supply port 13 with the closed position of the valve member 40, the fluid flows into the fluid space E through the supply aperture 12, the fluid is applied onto the valve member 40 and the reception surface 51 of the guide member 50 accompanying the valve member 40, and the guide member 50 slides on the cylindrical inner surface 11 of the fluid space E. Accordingly, the valve member 40 and the guide member 50 are integrally pushed above, thereby opening the valve member 40. When the supply of the fluid through the supply port 13 is stopped, the valve member 40 and the guide member 50 are moved toward the one end face of the fluid space E by the urging force of the coil spring 41, and the valve member 40 closes the supply aperture 12.

In this case, when the fluid is supplied through the supply port 13, the fluid is received also by the reception surface 51 of the guide member 50. Accordingly, the valve member 40 easily floats. Consequently, the valve member 40 can be securely apart from the supply aperture 12. Operations and advantageous effects analogous to those descried above are thus exerted. In particular, in the guide member 50, the communication paths 71 are formed nearer to the distal end of the valve member 40 in addition to the communication paths 70 nearer to the rear end of the valve member 40. The resistance against the fluid decreases accordingly, which facilitates the fluid flow. Consequently, when the valve member 40 is opened, the valve member 40 and the guide member 50 can be further smoothly moved, while the fluid is further securely introduced. When the valve member 40 is closed, the supply aperture 12 can be further securely closed.

The attracting member 80 is provided. Accordingly, as the attraction of the magnetic force by the attracting member 80 is inversely proportional to the square of the distance, the attracting force is weak during movement of the valve member 40 from the closed position to the open position. Accordingly, the valve member 40 can easily float upward. Consequently, the valve member 40 can securely come apart from the supply aperture 12. Since the configuration only with the coil spring 41 has a proportional relationship between the amount of deflection and the load, the returning characteristics of the valve member 40 from the open position to the closed position, and the pressing force to the contact T of the one electrode Da are limited. However, the attraction of the magnetic force by the attracting member 80 is inversely proportional to the square of the distance. Consequently, the returning characteristics of the valve member 40 from the open position to the closed position can be improved, and the pressing force to the contact T of the one electrode Da can be improved, thereby allowing the contact to be securely held. That is, only with the coil spring 41, the contact T is difficult to be securely closed because the contact T returns in a weakly covering manner; this is also due to the inner pressure. However, during attraction by the magnetic force, the attracting force is increased in inversely proportional to the square of the distance. Accordingly, an acceleration occurs, an insulation film (oil film) on the upper surface of the contact is broken, and an effect of cleaning the contact T also occurs. Consequently, the contact T can be securely closed.

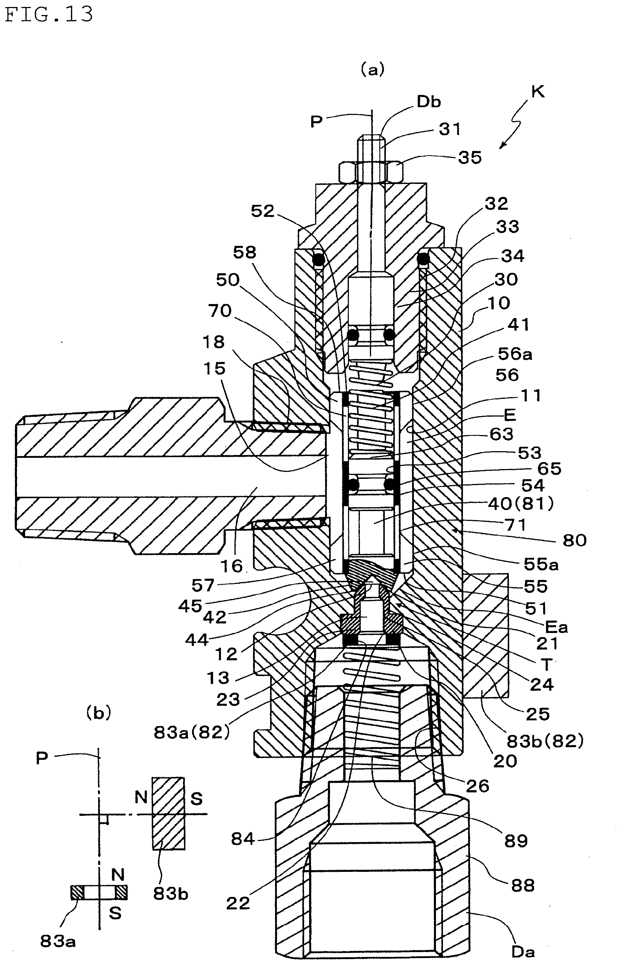

Figure 13 shows a modified example of the flow detecting device K not belonging to the invention. This device has a configuration substantially analogous to that described above. Unlike the above description, the body 10 is made of an insulating resin, and the second member 82 includes multiple (two in the embodiment) permanent magnets having N-pole surfaces and S-pole surfaces, i.e., an internal permanent magnet 83a and an external permanent magnet 83b. In the second member 82, the internal permanent magnet 83a is made of a conductor and is disposed to have a magnetic pole direction along the central axis P of the fluid space E, and the external permanent magnet 83b is disposed to have a magnetic pole direction along a direction orthogonal to the central axis P of the fluid space E. The internal permanent magnet 83a is formed to have a ring shape that has the communication hole 84 communicating with the inlet aperture 22 of the bush 20, and is provided at the head 23 of the bush 20. The external permanent magnet 83b is formed to have a disk shape, and is provided on a side surface of the body 10 that corresponds to the valve member 40 and is opposite to the discharge port 16. The internal permanent magnet 83a and the external permanent magnet 83b are disposed so that the N-pole surfaces are oriented inward and the S-pole surfaces are oriented outward.

The orientations of the magnetic pole surfaces are not limited thereto. In consideration of the balance with the conductive coil spring 41, the attracting force by the attracting member 80 is adjusted by the material and size of the permanent magnet, the magnetic permeability of the valve member 40, the distance between the valve member 40 and the permanent magnet. An adaptor 88 is screwed into the inlet hole 26 of the body 10. A conductive coil 89 intervenes between the adaptor 88 and the internal permanent magnet 83a. The adaptor 88 serves as the one electrode Da.

The plurality of permanent magnets that are internal permanent magnet 83a and the external permanent magnet 83b are thus used. Accordingly, the synergy can facilitate adjustment of the attracting force, and adjustment of the balance with the coil spring 41. The effective range of the magnetic forces and the magnetic lines of the permanent magnets can be adjusted. Accordingly, fluids having various types of properties can be supported. In this example, the internal permanent magnet 83a and the external permanent magnet 83b are arranged as described above. Accordingly, the range where the attracting force of the internal permanent magnet 83a reaches decreases. Consequently, the valve member 40 easily comes apart, and when the valve member 40 is returned, this member can securely achieve closing due to the attracting force of the internal permanent magnet 83a. Also described above, in general, the attracting force of a magnet is inversely proportional to the square of the distance. However, the arrangement of the external permanent magnet 83b can exert an effect where the attracting force of a magnet is inversely proportional to the cube of the distance. Accordingly, it is believed that the valve member 40 can be easily opened and closed. That is, according to the arrangement of the internal permanent magnet 83a and the external permanent magnet 83b, the magnetic lines of the internal permanent magnet 83a are captured by the external permanent magnet 83b, and the effective range (magnetic fields) where the internal permanent magnet 83a attracts the valve member 40 can be reduced. Consequently, even with a slight lifting amount of the valve member 40, the force of attracting the valve member 40 by the internal permanent magnet 83a can be reduced, and the valve member 40 can be easily, securely opened. The magnetic forces and arrangements of the internal permanent magnet 83a and the external permanent magnet 83b are adjusted, thereby allowing the lifting amount and lifting time (opening time) of the valve member 40 to be adjusted. While the valve member 40 is closed, the valve member 40 can be securely closed by the attracting force of the internal permanent magnet 83a.

In the embodiment shown in Figures 11 to 13, the bush 20 may be made up of a non-magnetically attachable body, or be made up of a permanent magnet or a magnetically attachable material. In the case of the configuration with a permanent magnet, the bush 40 also constitutes the second member 82. The embodiment shown in Figure 13 has the configuration including the two magnets, which are the internal permanent magnet 83a and the external permanent magnet 83b. However, the configuration is not necessarily limited thereto. Alternatively, three or more magnets may be provided. The properties, such as the shapes, materials, and strengths, of the magnets, may be freely, appropriately determined. The attachment positions of the magnets may be freely, appropriately determined; for example, the magnets may be buried in the body 10. The determination may be appropriately changed.

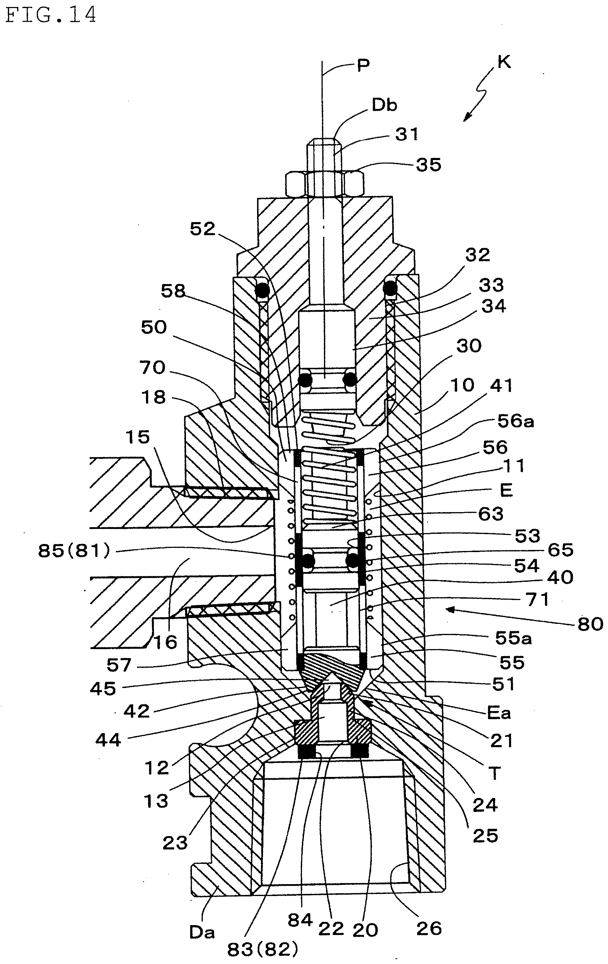

Figure 14 shows a device K for detecting fluid flow according to still another embodiment of the invention. This device has a configuration substantially analogous to that described above. However, the configuration of the attracting member 80 is different. In the attracting member 80, the first member 81 is made up of the coil 85 that is made of a magnetically attachable material and is wound around the narrow part 54 of the guide member 50, and the second member 82 is made up of a permanent magnet 83 that is analogous to that described above and is provided additionally for the bush 20 of the body 10. The coil 85 wound around the guide member 50 is attracted, thereby allowing the valve member 40 to be indirectly attracted.

In this example, the valve member 40 may be made up of a non-magnetically attachable body, or be made up of a permanent magnet or of a magnetically attachable material. In the case of the configuration with a permanent magnet or a magnetically attachable material, the valve member 40 also constitutes the first member 81. The bush 20 may be made up of a non-magnetically attachable body, or be made up of a permanent magnet or of a magnetically attachable material. In the case of the configuration with a permanent magnet, the bush 40 also constitutes the second member 82.

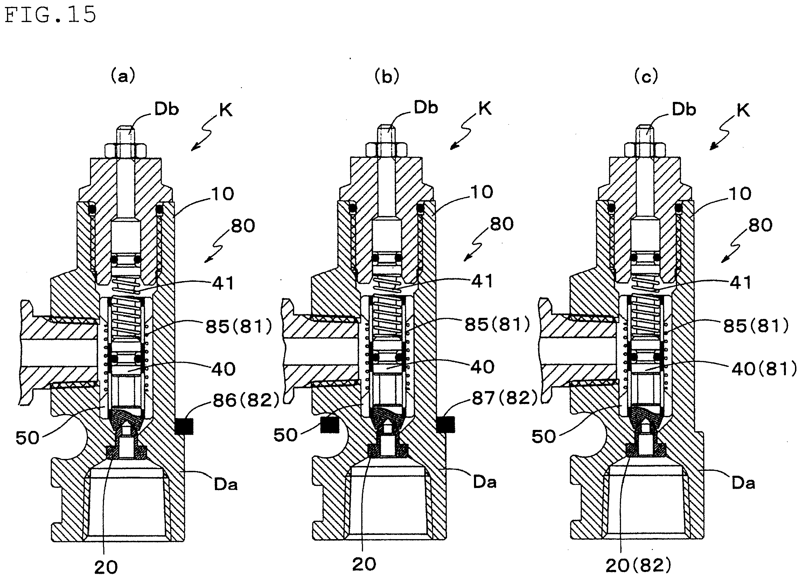

Next, Figure 15 shows modified examples of the device for detecting fluid flow. A flow detecting device K shown in Figure 15(a) is substantially analogous to the flow detecting device K shown in Figure 14. However, the second member 82 is made up of a half-ring-shaped permanent magnet 86 additionally provided on the outside of the body 10. A flow detecting device K shown in Figure 15(b) is substantially analogous to the flow detecting device K shown in Figure 14. However, the second member 82 is made up of a ring-shaped permanent magnet 87 additionally provided on the outside of the body 10.

A flow detecting device K shown in Figure 15(c) includes the coil 85 as with the flow detecting device K shown in Figure 14. The first member 81 is made up of the valve member 40 and the coil 85. The second member 82 is made up of the bush 20. The bush 20 is made up of a permanent magnet.

As shown in Figures 2 to 5, the device K for detecting fluid flow according to the embodiment includes a body 10 that has a fluid space E having a cylindrical inner surface 11 allowing a fluid to pass therethrough, and is made up of a conductor, such as metal. In the body 10, a fluid supply port 13 having a supply aperture 12 centered on the central axis P of the fluid space E is formed at one end of this fluid space E. One end Ea of the fluid space E is formed in a manner inclined toward the supply aperture 12. A male thread 14 for connection to the lubrication pipeline is formed on an external side of a site where the supply port 13 is formed. A fluid discharge port 16 that has a discharge aperture 15 communicating with the fluid space E is formed on a side of the body 10. The discharge port 16 internally includes a female thread part 17 for connection to the lubrication pipeline 4, and is formed to have an adaptor shape allowing detachable connection to the body 10 by a thread member 18.

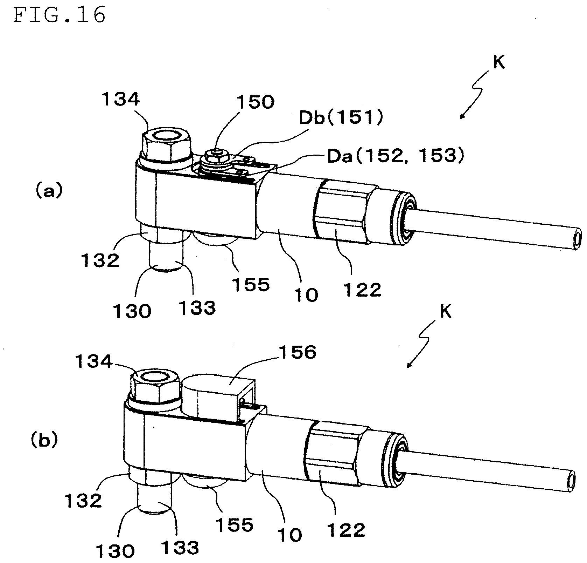

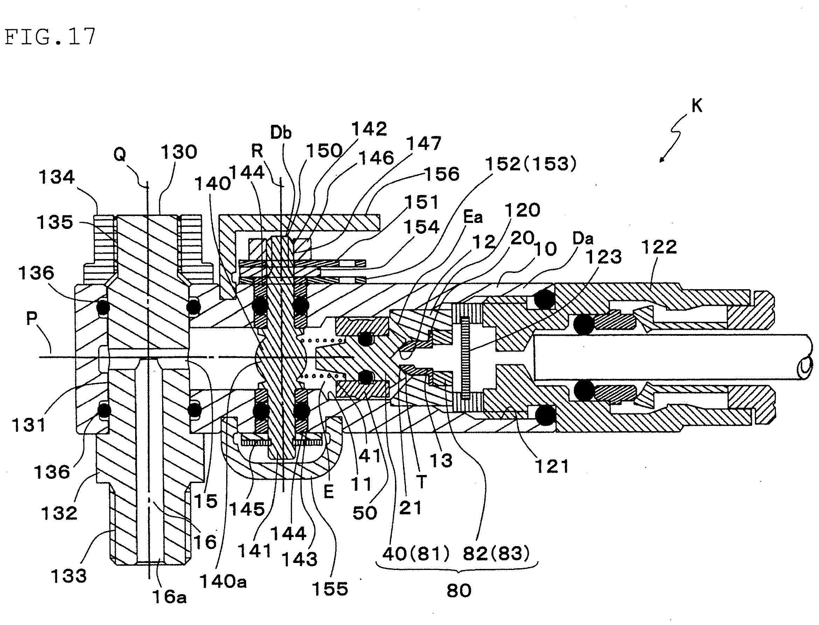

Figures 16 and 17 show a device K for detecting fluid flow according to another type of the embodiment of the invention. The flow detecting device K includes a body 10 that has a fluid space E having a cylindrical inner surface 11 allowing a fluid to pass therethrough, and is made up of a conductor, such as metal. A ring-shaped end member 120 constituting the one end Ea of the fluid space E is fitted to the body 10. The bush 20 that is made up of a conductor, such as of metal, and is coaxial with the central axis P of the fluid space E is fitted to the end member 120. In the bush 20, the fluid supply port 13 having the supply aperture 12 centered on the central axis P of the fluid space E is formed. The end of the supply aperture 12 constitutes the aperture edge 21 of the supply aperture 12, the edge being formed tapering in an inclined manner and being arranged in the fluid space E in a protruding manner. A site of the end member 120 that constitutes the one end Ea of the fluid space E is formed inclining toward the supply aperture 12. The ring-shaped permanent magnet 83 is fitted to the end member 120; this magnet constitutes the attracting member 80 analogous to that described above at the position opposite to the supply aperture 12 of the bush 20, and serves as the second member 82 that attracts the valve member 40 serving as the first member 81 described later.

On the inner side of a one end portion of the body 10, a female thread 121 is formed. A connection member 122 for connection with a lubrication pipe is provided to be screwed into the female thread 121. A coin-shaped filter 123 intervenes between the end member 120 and the connection member 122.

A holding rod 130 that holds the body 10, can be relatively rotated about the axis on an axis line Q orthogonal to the central axis P of the fluid space E, and can be locked at a required rotation position, is provided for the body 10 on another side thereof outer than the other electrode Db, described later, in a penetrating manner. In the body 10, a through-hole 131 into which the holding rod 130 is inserted is formed. A one-end part of the holding rod 130 protruding from the body 10 includes a large-diameter part 132 having a larger diameter than the through-hole 131, and a male thread 133 that is formed outer than the large-diameter part 132 and is to be screwed into the lubrication site. On the other-end part of the holding rod 130 protruding from the body 10, a male thread 135 that is screwed into a nut 134 is formed. The holding rod 130 is allowed to be relatively rotated with respect to the body 10 by loosening the nut 134. The holding rod 130 is locked with respect to the body 10 by fastening the nut 134. Reference sign 136 denotes an O-ring that intervenes between the holding rod 130 and the through-hole 131, for sealing.

In the body 10, the fluid discharge port 16, which has discharge apertures 15 communicating with the fluid space E, is formed. Specifically, the discharge ports 16 are formed in the holding rod 130. The discharge apertures 15 of the discharge port 16 are formed at two sites of the holding rod 130 that face the fluid space E. An outlet 16a of the discharge port 16 is formed on a one end face of the holding rod 130.

The body 10 is configured to be one electrode Da that is made up of a conductor and includes a contact T exposed toward one end of the fluid space E. The body 10 is provided with the other electrode Db that is made up of a conductor and is insulated from the one electrode Da. The other electrode Db has an axis on the axis line R orthogonal to the central axis P of the fluid space E, has an exposure part 140 exposed on the other end of the fluid space E, and is formed to have a rod shape where a one-end part 141 and the other-end part 142 protrude from the body 10. An intermediate part of the exposure part 140 is formed to be spherical. That is, the exposure part 140 is formed to include a spherical part 140a with which an end of the coil spring 41, described later, is to be in contact. In the body 10, an insertion hole 143 into which the other electrode Db is inserted is formed. At a site of the other electrode Db that corresponds to the insertion hole 143, a holding member 144 that is made up of an insulator and holds the other electrode Db is provided. The holding member 144 is liquid-tightly fitted to the insertion hole 143.

A fixation ring 145 having a larger diameter than the insertion hole 143 is fitted to the one-end part 141 of the other electrode Db to prevent dropping off. Meanwhile, at the other-end part 142 of the other electrode Db, a male thread 147 to be screwed into the nut 146 is formed. The other electrode Db is fixed to the body 10 by fastening the nut 146. The other-end part 142 of the other electrode Db is formed as a connection part 150, with which a terminal 151 for connection is connected. The connection part 150 of the other electrode Db is provided with a connection part 152 of the one electrode Da in a state of being insulated from the connection part 150. The connection part 152 is made up of a terminal 153 for connection that is contact with the body 10. The terminals 151 and 153 are held between the body 10 and the nut 146 where an insulator 154 intervenes. Reference sign 155 denotes a cover that covers the one-end part 141 of the other electrode Db. Reference sign 156 denotes a cover that covers the other-end part 142 of the other electrode Db, the nut 146, and the terminals 151 and 153. The covers are formed to allow a mold resin to be injected therein.

The fluid space E internally stores: a valve member 40 that is made up of a conductor, such as metal, is moved along the central axis P of the fluid space E, comes into contact with the contact T of the one electrode Da to close the supply aperture 12, and comes apart from the contact T to open the supply aperture 12; and a coil spring 41 that is made up of a conductor, such as metal, is connected to the valve member 40 at one end while being connected to the spherical part 140a of the exposure part 140 of the other electrode Db at the other end, and always urges the valve member 40 in a direction of closing the supply aperture 12. Accordingly, this flow detecting device K can detect the fluid flow by electrically detecting connection when the valve member 40 is closed and disconnection when this member is opened in the electric circuit that includes the one electrode Da, the valve member 40, the coil spring 41 and the other electrode Db.

As described above, as shown in Figure 4, the contact T of the one electrode Da is provided at the aperture edge 12a of the supply aperture 12 and/or the peripheral part 12b of the aperture edge 12a. The peripheral part 12b includes the aperture edge 21 of the bush 20 at the supply aperture 12, and an outer peripheral part 28 that is a part of the one end Ea of the fluid space E outer than the bush 20. The aperture edge 21 of the bush 20 at the supply aperture 12 is formed tapering in an inclined manner, and is formed to protrude into the fluid space E.

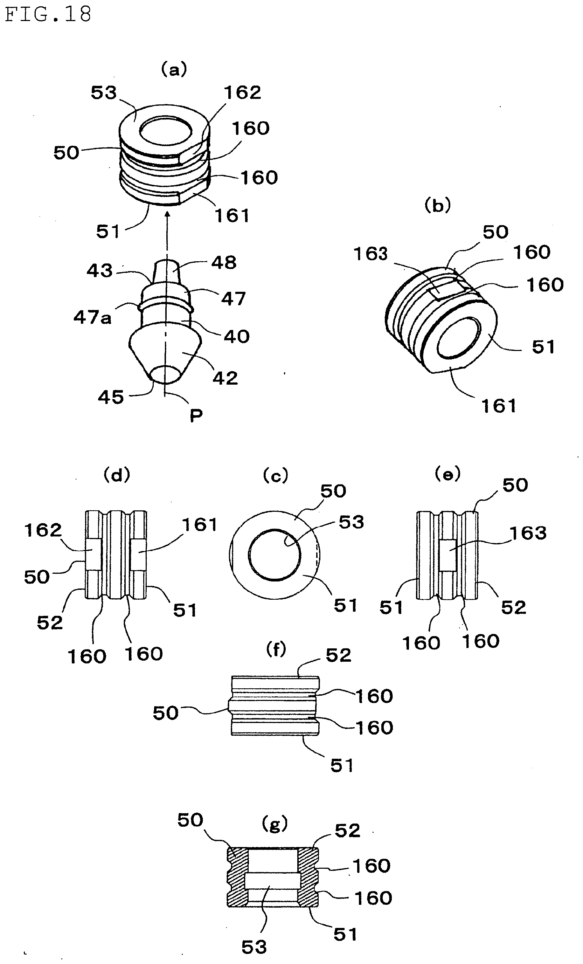

As shown in Figure 18(a), the valve member 40 is formed to have a rod shape that includes a distal end 42 capable of coming into contact with the contact T to block the supply aperture 12, and has an axis on the axis line along the central axis P of the fluid space E. The valve member 40 includes: a large-diameter part 47 that is nearer to the distal end and to be fitted into an insertion hole 53 of the guide member 50, described later; and a small-diameter part 48 that is nearer to the rear end and is formed narrower than the large-diameter part 47 so as to be inserted into the coil spring 41. One end of the coil spring 41 is held by a step part 43 between the large-diameter part 47 and the small-diameter part 48. The large-diameter part 47 of the valve member 40 is fitted into the insertion hole 53 via the O-ring 47a. The fitting is achieved by the O-ring 47a. Consequently, the valve member 40 can be easily fitted to the guide member 50. The distal end 42 of the valve member 40 is configured to include a depression part 45 that faces the aperture edge 21 at the supply aperture 12 and is depressed inward. The depression part 45 is formed to have a conical shape having an axis on the axis line along the central axis P of the fluid space E. Meanwhile, the aperture edge 21 of the bush 20 at the supply aperture 12 is formed to protrude into the fluid space E so as to face the inside of the depression part 45 when the valve member 40 blocks the supply aperture 12.

Contact with the contact T of the one electrode Da of the valve member 40 is achieved to the peripheral part 12b of the supply aperture 12. As shown in Figure 4(c), only the inner surface of the depression part 45 of the distal end 42 is in contact with the external surface of the aperture edge 21 of the bush 20.

Note that contact of the valve member 40 with the contact T of the one electrode Da may be achieved such that as shown in Figure 4(a), the inner surface of the depression part 45 of the distal end 42 is in contact with the external surface of the aperture edge 21 of the bush 20, and the peripheral part 44 of the depression part 45 is in contact with the outer peripheral part 28 that is of the one end Ea of the fluid space E and is outer than the aperture edge 21 of the bush 20. For example, as shown in Figure 4(b), the shape and dimensions of each member may be defined so as to achieve a mode where the peripheral part 44 of the depression part 45 is in contact only with the outer peripheral part 28 that is of the one end Ea of the fluid space E and is outer than the aperture edge 21 of the bush 20.

This flow detecting device K includes the guide member 50 that is made of an insulator, such as resin, and is additionally provided for the valve member 40 and is provided in the fluid space E. As shown in Figure 18, the guide member 50 is configured to secure the flow path of the fluid from the supply aperture 12 to the discharge aperture 15 while being slidable on the cylindrical inner surface 11 of the fluid space E, has a reception surface 51 facing one end face of the fluid space E while receiving the fluid from the supply aperture 12, and has a top surface 52 facing another end face of the fluid space E. The insertion hole 53 is formed in the guide member 50 in a penetrating manner; this hole has an axis on the axis line along the central axis P of the fluid space E, and the distal end 42 of the valve member 40 is inserted through this hole, with the distal end 42 protruding. Groove-shaped groove paths 160 are formed on the peripheral surface of the guide member 50; the paths have an inlet port 161 at a part of the guide member 50 closer to the one end face of the fluid space E, and an outlet port 162 at a part of the guide member 50 closer to the other end face of the fluid space E, and are along the circumferential direction and allow the fluid to pass therealong. The two groove paths 160 are provided on the peripheral surface of the guide member 50. The groove paths 160 communicate with each other at an intermediate communication path 163.

Consequently, in the fluid flow detecting device K according to the other type of the embodiment, for example, wiring (not shown) is preliminarily connected to the one electrode Da and the other electrode Db. In this case, for example, wiring is preliminarily connected to the terminal 151 and the terminal 153. These terminals 151 and 153, to which the wiring is connected, are mounted on the other electrode Db via the insulator 154, and the nut 146 is screwed onto the male thread 147 to achieve fastening. Accordingly, the other electrode Db is fixed to the body 10. In this case, the other electrode Db is disposed across the fluid space E. Accordingly, the other electrode Db is rotated about the axis on the axis line R orthogonal to the central axis P of the fluid space E, and the contact part with the coil spring 41 is changed. However, as the coil spring 41 is in contact with the spherical part 140a, the coil spring 41 can be always in contact with the spherical surface even when the other electrode Db is rotated. This contact negates the need to adjust the position of the other electrode Db, and can facilitate assembly and facilitate stable connection.

Subsequently, the other-end part 142 of the other electrode Db, the nut 146, the terminal 151, and the terminal 153 are covered with the cover 156, and the mold resin is injected thereinto as required. In this case, the connection parts 150 and 152 of the one electrode Da and the other electrode Db can be provided on the side of the body 10 in an aggregated manner, and the device can be compact accordingly. Both the connection parts 150 and 152 can molded with insulative resin, thereby facilitating protection.

To attach the fluid flow detecting device K according to the other type of the embodiment to the lubrication site, the male thread 133 of the holding rod 130 having discharge port 16 is screwed into the lubrication site. In this case, the nut 134 is loosened to unlock the holding rod 130, and this device is attached, and subsequently the nut 134 is fastened to lock the rod. In this case, even when the holding rod 130 is rotated, the body 10 can be constantly positioned at a certain position. I Consequently, the flexibility of attachment at a narrow space is improved, which can facilitate the attachment.

In the case of actual use, in a manner analogous to that described above, the valve member 40 and the guide member 50 move to and fro. In this case, the groove paths 160 are provided along the circumferential direction of the guide member 50. Consequently, the resistance against fluid passage is increased. The valve member 40 can easily float upward accordingly. In particular, this configuration is suitable to a case where the fluid has a low viscosity. The viscosity is low. Accordingly, the fluid flow can be secured. The groove-shaped groove paths 160, which allow the fluid along the circumferential direction to pass therealong, are formed on the peripheral surface of the guide member 50. Consequently, the fluid passes along the circumferential direction of the guide member 50. Consequently, every time the guide member 50 slides on the cylindrical inner surface of the fluid space E, the peripheral surface of the guide member 50 can easily come into contact with new fluid. For example, in a case where the fluid is grease or the like, the adverse possibility of fixation can be eliminated. Other operations and advantageous effects are analogous to those described above.

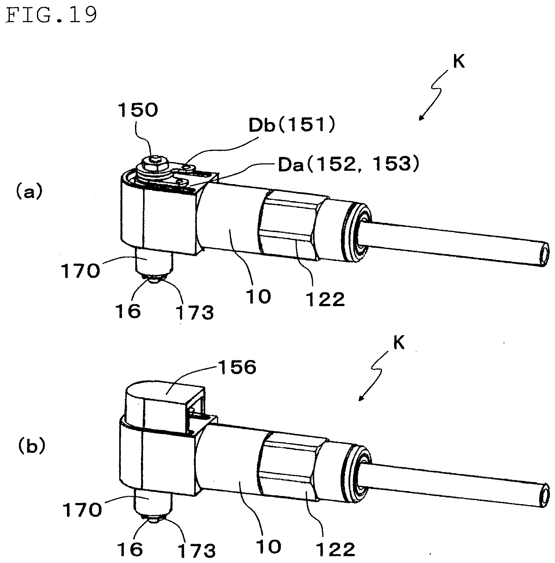

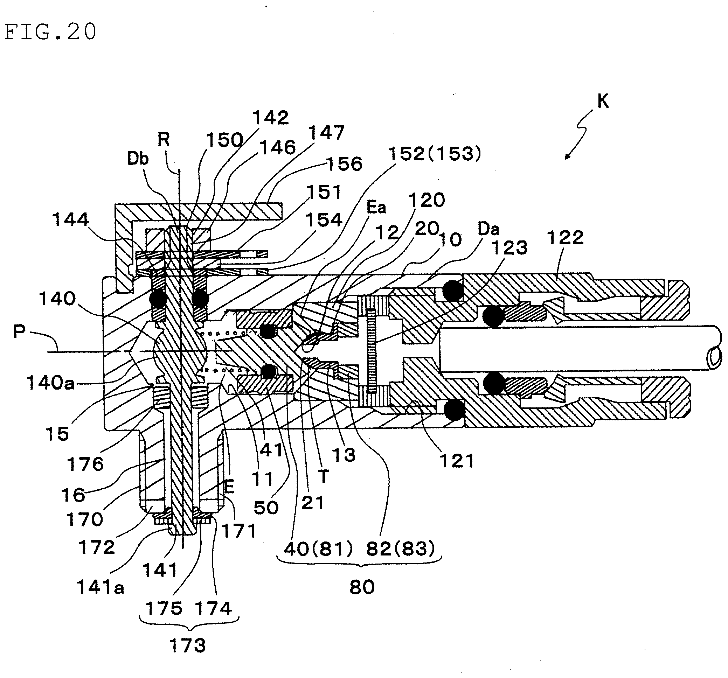

Figures 19 and 20 show a fluid flow detecting device K according to still another type of the embodiment of the invention. The flow detecting device K has a configuration analogous to that described above, but is different from that described above in that the holding rod 130 and the site provided therewith are eliminated, and the discharge port 16 is formed on the side of the body 10 so as to allow the one side of the other electrode Db to be inserted thereinto. A protrusion 170 having an axis on the axis line R orthogonal to the central axis P is formed on the side of the body 10. A male thread 171 that is to be screwed into the lubrication site is formed on the outer periphery of the protrusion 170, and the discharge aperture 15 and the discharge port 16 are formed therein. One end of the other electrode Db protrudes from the discharge port 16, and is formed as a large-diameter part 141a having a larger diameter than the discharge port 16. A groove 172 communicating with the discharge port 16 is formed on the side face of the protrusion 170.

The body 10 is provided with a support member 173 that is made up of an insulator and holds the one end of the other electrode Db while securing a flow path of the fluid. The support member 173 includes: a ring-shaped insulator 174 that is inserted into the one-end part 141 of the other electrode Db, has a larger diameter than the discharge port 16 and is in contact with the end face of the protrusion 170; and a fixation ring 175 that fixes the insulator 174. The insulator 174 and the fixation ring 175 are pressed against the end face of the protrusion 170 with the large-diameter part 141a of the one end face 141 of the other electrode Db by fixing the nut 146. The discharge aperture 15 of the discharge port 16 is provided with another support member 176 having a notch (not shown) formed to encircle the other electrode Da and to allow the fluid to pass therethrough. Accordingly, the discharge port 16 is formed at a site where the one end of the other electrode Db resides. Consequently, in comparison with a case where the discharge port 16 is provided outer than the other electrode Db, the device can be formed compact, and the flexibility of attachment at a narrow space can be improved.

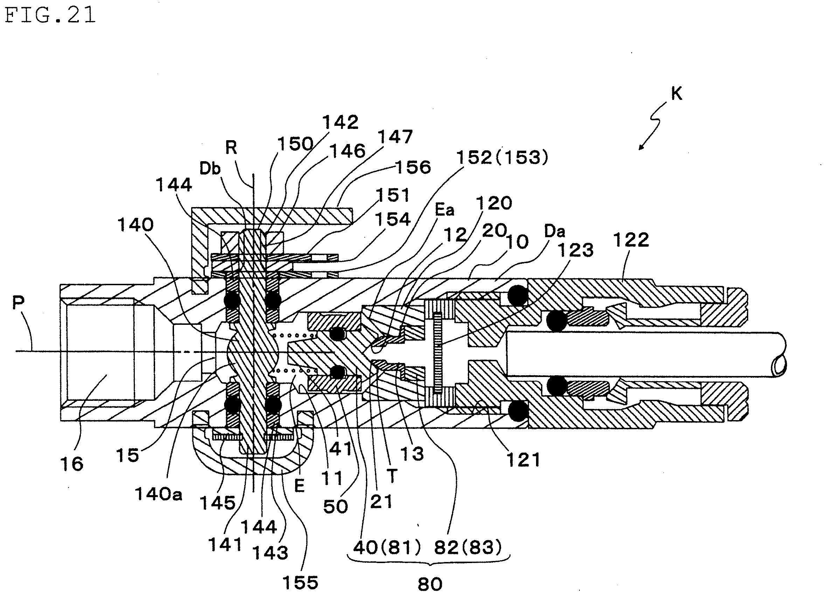

Figure 21 shows a device K for detecting fluid flow according to yet another embodiment of the invention. The flow detecting device K has a configuration analogous to that described above, but is different from that described above in that the holding rod 130 and the site provided therewith are eliminated, and the discharge port 16 is formed on the other end of the fluid space E so as to have the discharge aperture 15 centered on the central axis P of the fluid space E. The supply port 13 and the discharge port 16 can be provided on the central axis P of the fluid space E. Consequently, the body 10 can be used in a straightened manner, and the attaching versatility can be improved.

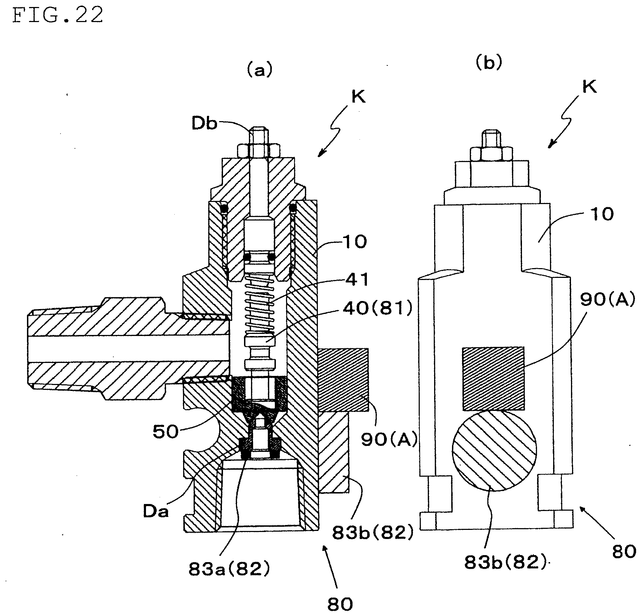

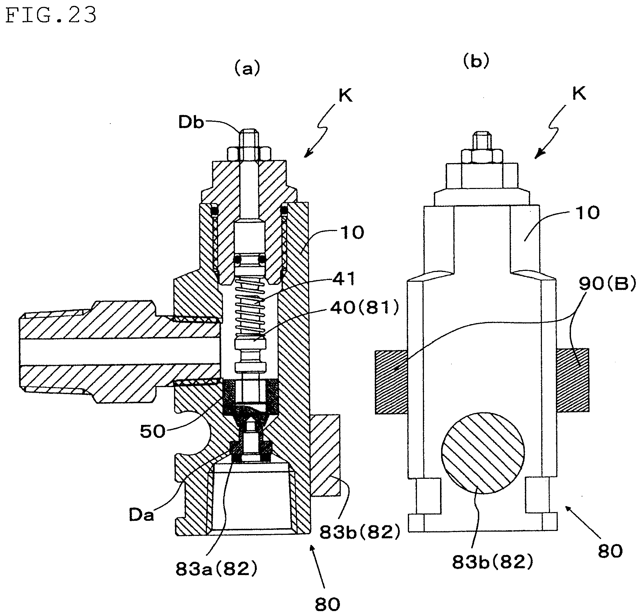

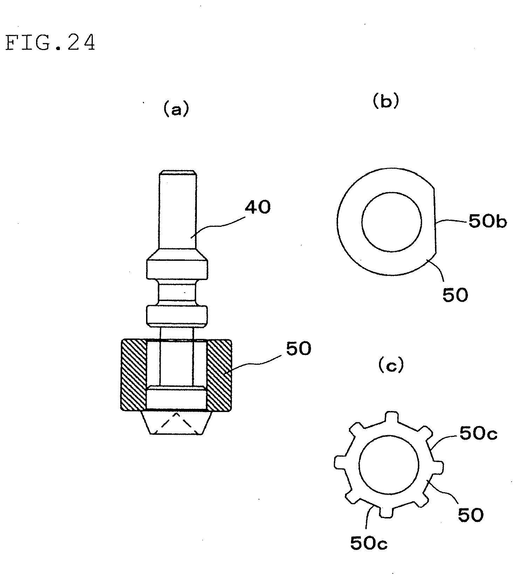

Figures 22 and 23 show a device K for detecting fluid flow according to an example not belonging to the invention. The basic configuration of the flow detecting device K is analogous to the flow detecting device K shown in Figure 11, but is different in that the body 10 is made of transparent resin, the one electrode Da is made up of the bush 20, and the guide member 50 is provided only on the distal end of the valve member 40. In detail, as shown in Figures 24(a) and 24(b), for example, the guide member 50 may be formed to have a cylindrical shape having one notch 50b that is provided on the outer periphery, is oriented in the axial direction and allows the fluid to pass therethrough. In detail, as shown in Figure 24(c), the guide member 50 may be formed to have a cylindrical shape having a plurality of notches 50c that are provided on the outer periphery, are in an equiangular relationship, are oriented in the axial direction, and allow the fluid to pass therethrough.

Furthermore, the body 10 is provided with a photosensor 90 that detects opening and closing of the valve member 40. The fluid flow can be detected by the photosensor 90. The photosensor 90 is called a photointerrupter, which is a well-known sensor that includes an optical emitter and an optical receiver facing each other, and senses interruption of light from the optical emitter by an object with the optical receiver, thereby determining the presence or absence and the position of the object. A photosensor 90(A) shown in Figure 22 is of a reflective type. The guide member 50 is color-coded between white and black in the vertical direction. The opening and closing of the valve member 40 are sensed by recognizing the guide member 50. A photosensor 90(B) shown in Figure 23 is of a reflective type. The guide member 50 is formed to be transparent, which allows the valve member 40 to be recognized.

In the flow detecting device K shown in Figures 11 to 23, the combination of the first member 81 and the second member 82 is not limited to that described above, and may be appropriately configured instead. In the flow detecting device K shown in Figures 11 to 21, the valve member 40 may be configured to be slidable on the guide member 50 as with the flow detecting device K shown in Figure 10. The configuration may be appropriately modified.

In the device K for detecting fluid flow according to the example, the one electrode Da and the other electrode Db are not limited to those described above, and may be appropriately modified. Furthermore, in the embodiment described above, a member of detecting opening and closing of the valve member 40 is achieved by the members through the electrodes Da and Db or by the member through the photosensor 90. However, the configuration is not necessarily limited thereto. For example, detection may be achieved by any member, such as a member of detection through an image sensor. The configuration may be appropriately modified. The image sensor is adopted in an optical mouse and the like, and calculates the amount of movement by change of an image. Furthermore, the shapes, sizes, materials and the like of the valve member 40 and the guide member 50 are not limited to those described above.

### [Reference Signs List]

- K: Flow detecting device
- S: Lubrication system
- 1: Lubricant pump apparatus
- 2: Quantitative valve
- 3: Lubrication site
- 4: Lubrication pipeline
- 5: Detector
- 6,7: Wiring
- 10: Body
- 11: Inner surface
- E: Fluid space
- P: Central axis
- 12: Supply aperture
- 12a: Aperture edge
- 12b: Peripheral part
- 13: Supply port
- 15: Discharge aperture
- 16: Discharge port
- 20: Bush
- Da: One electrode
- T: Contact
- 21: Aperture edge
- Db: Other electrode
- 28: Outer peripheral part
- 30: Exposure part
- 31: Connection part
- 33: Holding member
- 34: Holding hole
- 35: Nut
- 40: Valve member
- 41: Coil spring
- 42: Distal end
- 43: Step part
- 44: Peripheral edge part
- 45: Depression part
- 46: Outer peripheral edge
- 47: Large-diameter part
- 48: Small-diameter part
- 50: Guide member
- 51: Reception surface
- 52: Top surface
- 53: Insertion hole
- 54: narrow part
- 55: One-end slider
- 55a: One-end slide surface
- 56: Other-end slider
- 56a: Other-end slide surface
- 57: One-end notch
- 58: Other end notch
- 59: Communication path
- 50a: Guide member
- 53a: Slide hole
- 60: Large-diameter part
- 61: Small-diameter part
- 62: Small-diameter part
- 63: Step part
- 64: O-ring
- 70: Communication path
- 71: Communication path
- 80: Attracting member
- 81: First member
- 82: Second member
- 83: Permanent magnet
- 83a: Internal permanent magnet
- 83b: External permanent magnet
- 85: Coil
- 86: Permanent magnet
- 87: Permanent magnet
- 90: Photosensor
- 91: Adaptor (one electrode Da)
- 92: Coil
- 120: End member
- 122: Connection member
- 123: Filter
- 130: Holding rod
- Q: Axis line
- 131: Through-hole
- 134: Nut
- R: Axis line
- 140: Exposure part
- 140a: Spherical part
- 141: One-end part
- 142: Another-end part
- 143: Insertion hole
- 144: Holding member
- 145: Fixation ring
- 146: Nut
- 150: Connection part
- 151: Terminal for connection
- 152: Connection part
- 153: Terminal for connection
- 160: Groove path
- 170: Protrusion
- 173: Support member
- 176: Support member

## Claims

1. A device for detecting fluid flow (K), comprising a body (10) having a fluid space (E) that allows fluid to pass therethrough and has a cylindrical inner surface (11),
wherein the body is provided with a fluid supply port (13) that has a supply aperture (12) centered on a central axis (P) of the fluid space and is formed at one end of the fluid space,
the body (10) is provided with a fluid discharge port (16) that has a discharge aperture (15) communicating with the fluid space,
the body (10) is provided with one electrode (Da) that is made up of a conductor and has a contact (T) exposed at one end of the fluid space,
the body (10) is provided with another electrode (Db) that is made up of a conductor, has an exposure part (30) exposed at another end of the fluid space, and is insulated from the one electrode,
a valve member (40) made up of a conductor is stored in the fluid space, the valve member being moved along the central axis of the fluid space, coming into contact with the contact (T) of the one electrode (Da) to close the supply aperture, and coming apart from the contact (T) to open the supply aperture, and
a coil spring (41) made up of a conductor is stored in the fluid space, the coil spring being connected to the valve member (40) at one end while being connected to the exposure part of the other electrode (Db) at the other end, and always urging the valve member in a direction of closing the supply aperture,
wherein the fluid flow is allowed to be detected by electrically sensing connection when the valve member (40) is closed and disconnection when the valve member (40) is opened in an electric circuit that includes the one electrode (Da), the valve member (40), the coil spring (41), and the other electrode (Db),
**characterised in that** the body (10) is made up of a conductor, and **in that** a guide member (50) made up of an insulator is attached onto the valve member, the guide member being formed to secure a flow path of the fluid from the supply aperture to the discharge aperture while being slidable on the cylindrical inner surface of the fluid space, the guide member having a reception surface (51) facing one end face of the fluid space while receiving the fluid from the supply aperture, and having a top surface (52) facing another end face of the fluid space.

2. The device for detecting fluid flow according to claim 1,
wherein the valve member is formed to have a rod shape that includes a distal end (42) capable of blocking the supply aperture, and has an axis on an axis line along the central axis of the fluid space,
the guide member has an insertion hole (53) which has an axis on the axis line along the central axis of the fluid space and into which the valve member is inserted therethrough with the distal end protruding therefrom,
a narrow part (54) is formed on an outer periphery of an intermediate part of the guide member, the narrow part allowing the fluid to pass therethrough along a circumferential direction,
a part of the guide member close to the one end face of the fluid space is configured to be a one-end slider (55) that includes the reception surface, and includes a one-end slide surface (55a) slidable on the cylindrical inner surface of the fluid space,
a part of the guide member close to the other end face of the fluid space is configured to be an other-end slider (56) that includes the top surface, and includes an other-end slide surface (56a) slidable on the cylindrical inner surface of the fluid sp ace,
a one-end notch (57) is formed on an outer side of the one-end slider, the one-end notch ranging between the reception surface and the narrow part and allowing the fluid to pass therethrough, and
an other-end notch (58) is formed on an outer side of the other-end slider, the other-end notch ranging between the top surface and the narrow part and allowing the fluid to pass therethrough.

3. The device for detecting fluid flow according to claim 2,
wherein a plurality of the one-end notches are provided,
the one-end notches are each formed to have an identical size and have an identical shape, and are arranged about the axis line at regular angular intervals,
a plurality of the other end notches are provided, and
the other-end notches are each formed to have an identical size and have an identical shape, and are arranged about the axis line at regular angular intervals.

4. The device for detecting fluid flow according to claim 2 or 3,
wherein the insertion hole is formed in the guide member to penetrate therethrough,
the valve member is configured to have a large-diameter part (47) fitted onto the insertion hole, and a small-diameter part (48) formed to be narrower than the large-diameter part, and
a plurality of communication paths (59) communicating with the insertion hole are formed at sites of the guide member, the sites corresponding to the small-diameter part of the valve member and at least being at any of the narrow part, the one-end notches, and the other-end notches.

5. The device for detecting fluid flow according to claim 4,
wherein the small-diameter part is provided close to a rear end of the valve member, and one end of the coil spring is stored in the insertion hole, and
the plurality of communication paths are formed at sites of the guide member where the narrow part and/or the other-end notch of the guide member reside.

6. The device for detecting fluid flow according to claim 5,
wherein the large-diameter part of the valve member is provided at a middle of the valve member,
the small-diameter part is provided between the distal end and the large-diameter part of the valve member, and
the plurality of communication paths are formed at sites of the guide member that correspond to the small-diameter part and are the narrow part and/or the one-end notch.

7. The device for detecting fluid flow according to claim 6,
wherein an O-ring (64) is arranged around the large-diameter part, the O-ring being elastically in contact with the inner surface of the insertion hole, and
the large-diameter part is inserted into the insertion hole via the O-ring.

8. The device for detecting fluid flow according to claim 1,
wherein a groove-shaped groove path (160) is formed on a peripheral surface of the guide member, the groove path having an inlet port (161) at a part of the guide member closer to the one end face of the fluid space, and an outlet port (162) at a part of the guide member closer to the other end face of the fluid space, the groove path being along a circumferential direction and allowing the fluid to pass therealong.

9. The device for detecting fluid flow according to any one of claims 1 to 8,
wherein the valve member is configured to include a distal end (42) capable of blocking the supply aperture, and
the distal end is configured to include a depression part (45) facing the supply aperture and being depressed inward.

10. The device for detecting fluid flow according to claim 9,
wherein the depression part is formed to have a conical shape having an axis on the axis line along the central axis of the fluid space.

11. The device for detecting fluid flow according to claim 9 or 10,
wherein an aperture edge (21) of the supply aperture is formed to protrude into the fluid space so that the aperture edge can face an inside of the depression part when the supply aperture is blocked by the valve member.

12. The device for detecting fluid flow according to claim 1,
wherein the contact of the one electrode is provided at an aperture edge (12a) of the supply aperture and/or a peripheral part (12b) of the aperture edge, and
the valve member is formed to have a rod shape that includes a distal end (42) capable of coming into contact with the contact to block the supply aperture, and has an axis on an axis line along the central axis of the fluid space.

13. The device for detecting fluid flow according to claim 1 to 12,
wherein the other electrode has an axis on the axis line along the central axis of the fluid space, has one end formed as an exposure part exposed on the other end face of the fluid space, and has another end formed to have a rod shape formed as a connection part protruding from the body,
the body is provided with a holding member (33) that is made up of an insulator and holds the other electrode, and
the holding member is provided with a holding hole (34) which has an axis on the axis line along the central axis of the fluid space, and which the exposure part of the other electrode internally face, and which stores the other end of the coil spring, and holds the connection part while allowing this connection part to protrude.

14. The device for detecting fluid flow according to claim 13,
wherein the holding member is detachably attached to the body.

## Patentansprüche

1. Vorrichtung zum Erfassen einer Fluidströmung (K), die einen Körper (10) mit einem Fluidraum (E) umfasst, der den Durchgang von Fluid durch ihn ermöglicht und eine zylindrische Innenfläche (11) aufweist,
wobei der Körper mit einer Fluidzufuhröffnung (13) versehen ist, die eine Zufuhröffnung (12) aufweist, die auf einer Mittelachse (P) des Fluidraums zentriert ist und an einem Ende des Fluidraums ausgebildet ist,
wobei der Körper (10) mit einer Fluidauslassöffnung (16) versehen ist, die eine Auslassöffnung (15) aufweist, die mit dem Fluidraum in Verbindung steht,
wobei der Körper (10) mit einer Elektrode (Da) versehen ist, die mit einem Leiter hergerichtet ist und einen Kontakt (T) aufweist, der an einem Ende des Fluidraums freiliegt,
wobei der Körper (10) mit einer anderen Elektrode (Db) versehen ist, die mit einem Leiter hergerichtet ist, einen freiliegenden Teil (30) aufweist, der an einem anderen Ende des Fluidraums freiliegt, und von der einen Elektrode isoliert ist,
wobei ein mit einem Leiter hergerichtetes Ventilelement (40) in dem Fluidraum untergebracht ist, wobei das Ventilelement entlang der Mittelachse des Fluidraums bewegt wird, mit dem Kontakt (T) der einen Elektrode (Da) in Kontakt kommt, um die Zufuhröffnung zu schliessen, und sich von dem Kontakt (T) entfernt, um die Zufuhröffnung zu öffnen, und
wobei eine mit einem Leiter hergerichtete Schraubenfeder (41) in dem Fluidraum untergebracht ist, wobei die Schraubenfeder an einem Ende mit dem Ventilelement (40) verbunden ist, während sie an dem anderen Ende mit dem freiliegenden Teil der anderen Elektrode (Db) verbunden ist, und das Ventilelement immer in eine Richtung zum Schliessen der Zufuhröffnung drückt,
wobei der Fluidstrom durch elektrisches Erfassen der Verbindung, wenn das Ventilelement (40) geschlossen ist, und der Unterbrechung, wenn das Ventilelement (40) geöffnet ist, in einem elektrischen Schaltkreis, der die eine Elektrode (Da), das Ventilelement (40), die Schraubenfeder (41) und die andere Elektrode (Db) umfasst, erfasst werden kann,
**dadurch gekennzeichnet, dass** der Körper (10) mit einem Leiter hergerichtet ist, und
dass ein mit einem Isolator hergerichtetes Führungselement (50) an dem Ventilelement angebracht ist, wobei das Führungselement so ausgebildet ist, dass es einen Strömungsweg des Fluids von der Zufuhröffnung zu der Auslassöffnung sicherstellt, während es auf der zylindrischen Innenfläche des Fluidraums verschiebbar ist, wobei das Führungselement eine Aufnahmefläche (51) aufweist, die einer Endfläche des Fluidraums zugewandt ist, während es das Fluid von der Zufuhröffnung aufnimmt, und eine obere Fläche (52) aufweist, die einer anderen Endfläche des Fluidraums zugewandt ist.

2. Vorrichtung zum Erfassen einer Fluidströmung nach Anspruch 1,
wobei das Ventilelement so ausgebildet ist, dass es eine Stabform aufweist, die ein distales Ende (42) umfasst, das die Zufuhröffnung blockieren kann, und eine Achse auf einer Achsenlinie entlang der Mittelachse des Fluidraums aufweist,
wobei das Führungselement ein Einführungsloch (53) hat, das eine Achse auf der Achsenlinie entlang der Mittelachse des Fluidraums hat und in das das Ventilelement durch dieses hindurch eingeführt wird, wobei das distale Ende davon vorsteht,
wobei ein schmaler Teil (54) an einem Aussenumfang eines Zwischenteils des Führungselements ausgebildet ist, wobei der schmale Teil den Durchgang des Fluids durch ihn hindurch entlang einer Umfangsrichtung ermöglicht,
wobei ein Teil des Führungselements nahe der einen Endfläche des Fluidraums so konfiguriert ist, dass es ein Schieber (55) des einen Endes ist, der die Aufnahmefläche umfasst, und eine Gleitfläche (55a) des einen Endes umfasst, die auf der zylindrischen Innenfläche des Fluidraums gleiten kann,
wobei ein Teil des Führungselements in der Nähe der anderen Endfläche des Fluidraums so konfiguriert ist, dass es ein Schieber (56) des anderen Endes ist, der die obere Oberfläche umfasst, und eine Gleitfläche (56a) des anderen Endes umfasst, die auf der zylindrischen Innenfläche des Fluidraums gleiten kann,
wobei eine Aussparung (57) des einen Endes an einer Aussenseite des Schiebers des einen Endes ausgebildet ist, wobei sich die Aussparung des einen Endes zwischen der Aufnahmefläche und dem schmalen Teil erstreckt und den Durchtritt des Fluids durch dieses hindurch ermöglicht, und
wobei eine Aussparung (58) des anderen Endes an einer Aussenseite des Schiebers des anderen Endes ausgebildet ist, wobei sich die Aussparung des anderen Endes zwischen der oberen Fläche und dem schmalen Teil erstreckt und den Durchtritt des Fluids durch dieses hindurch ermöglicht.

3. Vorrichtung zum Erfassen einer Fluidströmung nach Anspruch 2,
wobei eine Vielzahl von Aussparung des einen Endes vorgesehen ist,
wobei die Aussparungen des einen Endes jeweils so ausgebildet sind, dass sie eine identische Grösse und eine identische Form haben, und in regelmässigen Winkelabständen um die Achsenlinie herum angeordnet sind,
wobei eine Vielzahl von Aussparungen des anderen Endes vorgesehen sind, und
wobei die Aussparungen des anderen Endes jeweils so ausgebildet sind, dass sie eine identische Grösse und eine identische Form haben, und in regelmässigen Winkelabständen um die Achsenlinie herum angeordnet sind.

4. Vorrichtung zum Erfassen einer Fluidströmung nach Anspruch 2 oder 3,
wobei das Einführungsloch in dem Führungselement ausgebildet ist, um durch es hindurch zu durchdringen,
wobei das Ventilelement so ausgestaltet ist, dass es einen Teil (47) mit grossem Durchmesser aufweist, der in das Einführungsloch eingepasst ist, und einen Teil (48) mit kleinem Durchmesser, der so ausgebildet ist, dass er schmaler als der Teil mit grossem Durchmesser ist, und
wobei eine Vielzahl von Verbindungswegen (59), die mit dem Einführungsloch in Verbindung stehen, an Stellen des Führungselements ausgebildet sind, wobei die Stellen dem Teil mit kleinem Durchmesser des Ventilelements entsprechen und zumindest an einem der schmalen Teile, der Aussparungen des einen Endes, und der Aussparungen des anderen Endes liegen.

5. Vorrichtung zum Erfassen einer Fluidströmung nach Anspruch 4,
wobei der Teil mit kleinem Durchmesser in der Nähe eines hinteren Endes des Ventilelements vorgesehen ist und ein Ende der Schraubenfeder in dem Einführungsloch untergebracht ist, und
wobei die Vielzahl der Verbindungswege an Stellen des Führungselements ausgebildet sind, an denen sich der schmale Teil und/oder die Aussparung des anderen Endes des Führungselements befinden.

6. Vorrichtung zum Erfassen einer Fluidströmung nach Anspruch 5,
wobei der Teil mit grossem Durchmesser des Ventilelements in der Mitte des Ventilelements vorgesehen ist,
wobei der Teil mit kleinem Durchmesser zwischen dem distalen Ende und dem Teil mit grossem Durchmesser des Ventilelements vorgesehen ist, und
wobei die Vielzahl der Verbindungswege an Stellen des Führungselements ausgebildet sind, die dem Teil mit kleinem Durchmesser entsprechen und der schmale Teil und/oder die Aussparung des einen Endes sind.

7. Vorrichtung zum Erfassen einer Fluidströmung nach Anspruch 6,
wobei ein O-Ring (64) um den Teil mit grossem Durchmesser angeordnet ist, wobei der O-Ring elastisch in Kontakt mit der Innenfläche des Einführungslochs ist, und
wobei das Teil mit dem grossen Durchmesser über den O-Ring in das Einführungsloch eingeführt wird.

8. Vorrichtung zum Erfassen einer Fluidströmung nach Anspruch 1,
wobei ein rillenförmiger Rillenpfad (160) auf einer Umfangsfläche des Führungselements ausgebildet ist, wobei der Rillenpfad eine Einlassöffnung (161) an einem Teil des Führungselements, das näher an der einen Endfläche des Fluidraums liegt, und eine Auslassöffnung (162) an einem Teil des Führungselements, das näher an der anderen Endfläche des Fluidraums liegt, aufweist, wobei der Rillenpfad entlang einer Umfangsrichtung verläuft und es dem Fluid ermöglicht, daran entlang zu fliessen.

9. Vorrichtung zum Erfassen einer Fluidströmung nach einem der Ansprüche 1 bis 8,
wobei das Ventilelement so ausgestaltet ist, dass es ein distales Ende (42) aufweist, das in der Lage ist, die Versorgungsöffnung zu blockieren, und
wobei das distale Ende so ausgestaltet ist, dass es ein Vertiefungsteil (45) aufweist, das der Zufuhröffnung zugewandt ist und nach innen gedrückt wird.

10. Vorrichtung zum Erfassen einer Fluidströmung nach Anspruch 9,
wobei das Vertiefungsteil so ausgebildet ist, dass er eine konische Form mit einer Achse auf der Achsenlinie entlang der zentralen Achse des Fluidraums aufweist.

11. Vorrichtung zur Erfassung einer Fluidströmung nach Anspruch 9 oder 10,
wobei eine Öffnungskante (21) der Zuführungsöffnung so ausgebildet ist, dass sie in den Fluidraum hineinragt, so dass die Öffnungskante einer Innenseite des Vertiefungsteils zugewandt sein kann, wenn die Zufuhröffnung durch das Ventilelement blockiert ist.

12. Vorrichtung zum Erfassen eines Fluidströmung nach Anspruch 1,
wobei der Kontakt der einen Elektrode an einer Öffnungskante (12a) der Zufuhröffnung und/oder einem Umfangsteil (12b) der Öffnungskante vorgesehen ist, und
wobei das Ventilelement so geformt ist, dass es eine Stabform aufweist, die ein distales Ende (42) umfasst, das in Kontakt mit dem Kontakt kommen kann, um die Zufuhröffnung zu blockieren, und eine Achse auf einer Achsenlinie entlang der Mittelachse des Fluidraums aufweist.

13. Vorrichtung zum Erfassen einer Fluidströmung nach einem der Ansprüche 1 bis 12,
wobei die andere Elektrode eine Achse auf der Achsenlinie entlang der Mittelachse des Fluidraums hat, ein Ende hat, das als ein freiliegendes Teil auf der anderen Endfläche des Fluidraums freiliegend ausgebildet ist, und ein anderes Ende hat, das so ausgebildet ist, dass es eine Stabform hat, die als ein aus dem Körper herausstehendes Verbindungsteil ausgebildet ist,
wobei der Körper mit einem Halteelement (33) versehen ist, das mit einem Isolator hergerichtet ist und die andere Elektrode hält, und
wobei das Halteelement mit einem Halteloch (34) versehen ist, das eine Achse auf der Achsenlinie entlang der Mittelachse des Fluidraums aufweist, und dem der freiliegende Teil der anderen Elektrode innen gegenüberliegt, und das das andere Ende der Schraubenfeder aufnimmt und den Verbindungsteil hält, während es diesem Verbindungsteil erlaubt, hervorzustehen.

14. Vorrichtung zum Erfassen einer Fluidströmung nach Anspruch 13,
wobei das Halteelement abnehmbar an dem Körper befestigt ist.

## Revendications

1. Dispositif de détection de l'écoulement d'un fluide (K), comprenant un corps (10) ayant un espace pour fluide (E) qui permet au fluide de le traverser et qui a une surface intérieure cylindrique (11),
dans lequel le corps est pourvu d'un orifice d'alimentation en fluide (13) qui a une ouverture d'alimentation (12) centrée sur un axe central (P) de l'espace de fluide et est formé à une extrémité de l'espace de fluide,
dans lequel le corps (10) est pourvu d'un orifice de décharge de fluide (16) qui a une ouverture de décharge (15) communiquant avec l'espace de fluide,
dans lequel le corps (10) est pourvu d'une électrode (Da) qui est constituée d'un conducteur et a un contact (T) exposé à une extrémité de l'espace de fluide,
dans lequel le corps (10) est pourvu d'une autre électrode (Db) qui est constituée d'un conducteur, a une partie d'exposition (30) exposée à une autre extrémité de l'espace de fluide, et est isolée de la première électrode,
dans lequel un élément de valve (40) constitué d'un conducteur est stocké dans l'espace de fluide, l'élément de valve étant déplacé le long de l'axe central de l'espace de fluide, venant en contact avec le contact (T) de la une électrode (Da) pour fermer l'ouverture d'alimentation, et s'écartant du contact (T) pour ouvrir l'ouverture d'alimentation, et
dans lequel un ressort hélicoïdal (41) constitué d'un conducteur est stocké dans l'espace de fluide, le ressort hélicoïdal étant relié à l'élément de valve (40) à une extrémité tout en étant relié à la partie d'exposition de l'autre électrode (Db) à l'autre extrémité, et poussant toujours l'élément de valve dans une direction de fermeture de l'ouverture d'alimentation,
dans lequel l'écoulement du fluide peut être détecté en détectant électriquement la connexion lorsque l'élément de valve (40) est fermé et la déconnexion lorsque l'élément de valve (40) est ouvert dans un circuit électrique qui comprend la première électrode (Da), l'élément de valve (40), le ressort hélicoïdal (41) et l'autre électrode (Db),
**caractérisé en ce que**
le corps (10) est constitué d'un conducteur, et
un élément de guidage (50) constitué d'un isolant est fixé sur l'élément de valve, l'élément de guidage étant formé pour sécuriser un chemin d'écoulement de fluide depuis l'ouverture d'alimentation jusqu'à l'ouverture de décharge tout en étant coulissant sur la surface intérieure cylindrique de l'espace de fluide, l'élément de guidage ayant une surface de réception (51) faisant face à une face d'extrémité de l'espace de fluide tout en recevant le fluide depuis l'ouverture d'alimentation, et ayant une surface supérieure (52) faisant face à une autre face d'extrémité de l'espace de fluide.

2. Dispositif de détection d'écoulement de fluide selon la revendication 1,
dans lequel l'élément de valve est formé pour avoir une forme de tige qui comprend une extrémité distale (42) capable de bloquer l'ouverture d'alimentation, et a un axe sur une ligne d'axe le long de l'axe central de l'espace de fluide,
dans lequel l'élément de guidage a un trou d'insertion (53) qui a un axe sur la ligne d'axe le long de l'axe central de l'espace de fluide et dans lequel l'élément de valve est inséré à travers celui-ci avec l'extrémité distale faisant saillie de celui-ci,
dans lequel une partie étroite (54) est formée sur une périphérie extérieure d'une partie intermédiaire de l'élément de guidage, la partie étroite permettant au fluide de passer à travers elle le long d'une direction circonférentielle,
dans lequel une partie de l'élément de guidage proche de la face d'une extrémité de l'espace de fluide est configurée pour être un coulisseau (55) à l'une extrémité qui comprend la surface de réception, et comprend une surface de coulissement (55a) à l'une extrémité pouvant coulisser sur la surface intérieure cylindrique de l'espace de fluide,
dans lequel une partie de l'élément de guidage proche de la face de l'autre extrémité de l'espace de fluide est configurée pour être un coulisseau (56) à l'autre extrémité qui comprend la surface supérieure, et comprend une surface de coulissement (56a) à l'autre extrémité pouvant coulisser sur la surface intérieure cylindrique de l'espace de fluide,
dans lequel une encoche (57) à l'une extrémité est formée sur un côté extérieur du coulisseau à l'une extrémité, l'encoche à l'une extrémité se situant entre la surface de réception et la partie étroite et permettant au fluide de passer à travers celle-ci, et
dans lequel une encoche (58) de l'autre extrémité est formée sur un côté extérieur du coulisseau à l'autre extrémité, l'encoche de l'autre extrémité se trouvant entre la surface supérieure et la partie étroite et permettant au fluide de passer à travers.

3. Dispositif de détection d'écoulement de fluide selon la revendication 2,
dans lequel une pluralité d'encoches à l'une extrémité sont prévues,
dans lequel les encoches à l'une extrémité sont chacune formées pour avoir une taille identique et ont une forme identique, et sont disposées autour de la ligne d'axe à des intervalles angulaires réguliers,
dans lequel une pluralité d'encoches à l'autre extrémité sont prévues, et
les encoches de l'autre extrémité sont tous formées pour avoir une taille identique et une forme identique, et sont disposées autour de la ligne de l'axe à des intervalles angulaires réguliers.

4. Dispositif de détection d'écoulement de fluide selon la revendication 2 ou 3,
dans lequel le trou d'insertion est formé dans l'élément de guidage pour pénétrer à travers celui-ci,
dans lequel l'élément de valve est configuré pour avoir une partie de grand diamètre (47) ajustée sur le trou d'insertion, et une partie de petit diamètre (48) formée pour être plus étroite que la partie de grand diamètre, et
une pluralité de chemins de communication (59) communiquant avec le trou d'insertion sont formés à des sites de l'élément de guidage, les sites correspondant à la partie de petit diamètre de l'élément de valve et étant au moins à l'un quelconque de la partie étroite, des encoches de l'une extrémité et des encoches de l'autre extrémité.

5. Dispositif de détection d'écoulement de fluide selon la revendication 4,
dans lequel la partie de petit diamètre est prévue près d'une extrémité arrière de l'élément de valve, et une extrémité du ressort hélicoïdal est stockée dans le trou d'insertion, et
dans lequel la pluralité de chemins de communication sont formés à des sites de l'élément de guidage où se trouvent la partie étroite et/ou l'encoche de l'autre extrémité de l'élément de guidage.

6. Dispositif de détection d'écoulement de fluide selon la revendication 5,
dans lequel la partie de grand diamètre de l'élément de valve est prévue au milieu de l'élément de valve,
dans lequel la partie de petit diamètre est prévue entre l'extrémité distale et la partie de grand diamètre de l'élément de valve, et
dans lequel la pluralité de chemins de communication sont formés à des sites de l'élément de guidage qui correspondent à la partie de petit diamètre et sont la partie étroite et/ou l'encoche à l'une extrémité.

7. Dispositif de détection d'écoulement de fluide selon la revendication 6,
dans lequel un joint torique (64) est disposé autour de la partie de grand diamètre, le joint torique étant élastiquement en contact avec la surface intérieure du trou d'insertion, et
dans lequel la partie de grand diamètre est insérée dans le trou d'insertion par l'intermédiaire du joint torique.

8. Dispositif de détection d'écoulement de fluide selon la revendication 1,
dans lequel un chemin de rainure en forme de rainure (160) est formé sur une surface périphérique de l'élément de guidage, le chemin de rainure ayant un orifice d'entrée (161) au niveau d'une partie de l'élément de guidage plus proche de la face de l'une extrémité de l'espace de fluide, et un orifice de sortie (162) au niveau d'une partie de l'élément de guidage plus proche de la face de l'autre extrémité de l'espace de fluide, le chemin de rainure étant le long d'une direction circonférentielle et permettant au fluide de passer le long de celui-ci.

9. Dispositif de détection d'écoulement de fluide selon l'une quelconque des revendications 1 à 8,
dans lequel l'élément de valve est configuré pour comprendre une extrémité distale (42) capable de bloquer l'ouverture d'alimentation, et
dans lequel l'extrémité distale est configurée pour comprendre une partie en dépression (45) faisant face à l'ouverture d'alimentation et étant enfoncée vers l'intérieur.

10. Dispositif de détection d'écoulement de fluide selon la revendication 9,
dans lequel la partie de dépression est formée pour avoir une forme conique ayant un axe sur la ligne d'axe le long de l'axe central de l'espace de fluide.

11. Dispositif de détection d'écoulement de fluide selon la revendication 9 ou 10,
dans lequel un bord d'ouverture (21) de l'ouverture d'alimentation est formé pour faire saillie dans l'espace de fluide de sorte que le bord d'ouverture peut faire face à un intérieur de la partie de dépression lorsque l'ouverture d'alimentation est bloquée par l'élément de valve.

12. Dispositif de détection d'écoulement de fluide selon la revendication 1,
dans lequel le contact de l'électrode est prévu au niveau d'un bord d'ouverture (12a) de l'ouverture d'alimentation et/ou d'une partie périphérique (12b) du bord d'ouverture, et
dans lequel l'élément de valve est formé pour avoir une forme de tige qui comprend une extrémité distale (42) capable de venir en contact avec le contact pour bloquer l'ouverture d'alimentation, et a un axe sur une ligne d'axe le long de l'axe central de l'espace de fluide.

13. Dispositif de détection d'écoulement de fluide selon la revendication 1 à 12,
dans lequel l'autre électrode a un axe sur la ligne d'axe le long de l'axe central de l'espace de fluide, a une extrémité formée comme une partie d'exposition exposée sur l'autre face d'extrémité de l'espace de fluide, et a une autre extrémité formée pour avoir une forme de tige formée comme une partie de connexion dépassant du corps,
dans lequel le corps est muni d'un élément de maintien (33) qui est constitué d'un isolant et maintient l'autre électrode, et
dans lequel l'élément de maintien est pourvu d'un trou de maintien (34) qui a un axe sur la ligne d'axe le long de l'axe central de l'espace fluide, et auquel la partie exposée de l'autre électrode fait face intérieurement, et qui stocke l'autre extrémité du ressort hélicoïdal, et maintient la partie de connexion tout en permettant à cette partie de connexion de faire saillie.

14. Dispositif de détection d'écoulement de fluide selon la revendication 13,
dans lequel l'élément de maintien est fixé de manière amovible au corps.
